(19)

**Europäisches Patentamt**
**European Patent Office**
**Office européen des brevets**

(11) **EP 3 826 943 B1**

(12) **EUROPÄISCHE PATENTSCHRIFT**

(45) Veröffentlichungstag und Bekanntmachung des Hinweises auf die Patenterteilung:
**08.06.2022 Patentblatt 2022/23**

(21) Anmeldenummer: **19758883.3**

(22) Anmeldetag: **19.07.2019**

(51) Internationale Patentklassifikation (IPC):
**B65G 1/137** *(2006.01)*

(52) Gemeinsame Patentklassifikation (CPC):
**B65G 1/1378**

(86) Internationale Anmeldenummer:
**PCT/AT2019/060241**

(87) Internationale Veröffentlichungsnummer:
**WO 2020/019009 (30.01.2020 Gazette 2020/05)**

(54) **LAGER- UND KOMMISSIONIERSYSTEM MIT VERKÜRZTER DURCHLAUFZEIT UND VERFAHREN ZUM BETRIEB DESSELBEN**

STORAGE AND ORDER-PICKING SYSTEM WITH A REDUCED PROCESSING TIME AND METHOD FOR OPERATING SAME

SYSTÈME D'ENTREPOSAGE ET DE PRÉPARATION DE COMMANDES PRÉSENTANT UN TEMPS DE CYCLE RÉDUIT ET PROCÉDÉ DE FONCTIONNEMENT DE CELUI-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.07.2018 AT 506382018**

(43) Veröffentlichungstag der Anmeldung:
**02.06.2021 Patentblatt 2021/22**

(73) Patentinhaber: **TGW Logistics Group GmbH**
**4614 Marchtrenk (AT)**

(72) Erfinder:
- **LINDLEY, Timothy**
  **58239 Schwerte (DE)**
- **KETTLGRUBER, Gerald**
  **4030 Linz (AT)**
- **SCHRÖPF, Harald Johannes**
  **4600 Wels (AT)**

(74) Vertreter: **Burger, Hannes**
**Anwälte Burger & Partner**
**Rechtsanwalt GmbH**
**Rosenauerweg 16**
**4580 Windischgarsten (AT)**

(56) Entgegenhaltungen:
**DE-A1-102011 106 667     DE-B3-102011 116 081**

- **Das: "SSI CARRIER", , 20. November 2019 (2019-11-20), XP055644833, Gefunden im Internet: URL:https://www.ssi-schaefer.com/resource/ blob/12630/d731168202e0ea6de95b9b1e6bdd0d 8 5/ssi-carrier--taschensorter--dam-download -de-892--data.pdf [gefunden am 2019-11-20]**
- **SSI SCHÄFER D-A-CH: "SSI Carrier: Das hochdynamische Taschensorter-System für E-Commerce und Omnichannel", YouTube, 7. März 2018 (2018-03-07), Seite 1, XP054979939, Gefunden im Internet: URL:https://www.youtube.com/watch?v=ASYRj u TOJ-U [gefunden am 2019-11-21]**

**Beschreibung**

Die Erfindung betrifft ein Verfahren zum Kommissionieren von Waren in einem Lager- und Kommissioniersystem mit einem Warenlager, einer Beladestation, einer Sortiereinheit, einer Packstation, einem Hängefördersystem mit Transportmitteln zur Aufnahme von Waren und zum Transport der Waren in den Transportmitteln zwischen der Beladestation, der Sortiereinheit und der Packstation, und einem Steuerungssystem. Das Verfahren umfasst die Bereitstellung von Waren im Warenlager, wobei die Waren Liegewaren und/oder Hängewaren umfassen, sowie das Erfassen von Kommissionieraufträgen durch das Steuerungssystem. Weiterhin umfasst das Verfahren die Auslagerung von Waren aus dem Warenlager, konkret einen Transport einer Ware aus dem Warenlager gemäß einem ersten Kommissionierauftrag zur Beladestation, und einen Transport einer Ware aus dem Warenlager gemäß einem zweiten Kommissionierauftrag zur Beladestation. Darüber hinaus wird die Ware gemäß dem ersten Kommissionierauftrag und die Ware gemäß dem zweiten Kommissionierauftrag jeweils an der Beladestation bereitgestellt, und es werden auch Transportmittel des Hängefördersystems an der Beladestation bereitgestellt. In Folge wird die Ware zum ersten Kommissionierauftrag in eines der Transportmittel des Hängefördersystems und die Ware zum zweiten Kommissionierauftrag in eines (ein anderes) der Transportmittel des Hängefördersystems umgeladen. Danach werden die Transportmittel über das Hängefördersystem von der Beladestation in die Sortiereinheit transportiert. Schließlich werden die sortierten Transportmittel von der Sortiereinheit zu der Packstation transportiert.

Weiterhin betrifft die Erfindung ein Lager- und Kommissioniersystem zum Kommissionieren von Waren, insbesondere zur Durchführung des oben genannten Verfahrens. Das Lager- und Kommissioniersystem umfasst ein Warenlager zur Bereitstellung von Waren, wobei die Waren Liegewaren und/oder Hängewaren umfassen. Das Warenlager umfasst zudem Lagerplätze und ein Warentransportsystem zum Transport der Waren zwischen den Lagerplätzen und der Beladestation. Weiterhin umfasst das Lager- und Kommissioniersystem eine Beladestation zum Umladen der Waren in Transportmittel gemäß Kommissionieraufträgen, eine Sortiereinheit zum Sortieren der Transportmittel, eine Packstation zum Umladen der Waren aus den Transportmitteln in Versandladehilfsmittel gemäß Kommissionieraufträgen, ein Hängefördersystem mit Transportmitteln zur Aufnahme von Waren und zum Transport der Waren in den Transportmitteln zwischen der Beladestation, der Sortiereinheit und der Packstation, und ein Steuerungssystem, welches mit dem Warenlager, der Beladestation, der Sortiereinheit, dem Hängefördersystem und der Packstation datentechnisch verbunden ist, und zum Erfassen von Kommissionieraufträgen ausgebildet ist. Weiterhin ist das Steuerungssystem zur Ansteuerung des Warentransportsystems für die Auslagerung der Waren aus dem Warenlager ausgebildet, wobei das Auslagern einen Transport einer Ware aus dem Warenlager zur Beladestation gemäß einem ersten Kommissionierauftrag, und einen Transport einer Ware aus dem Warenlager zur Beladestation gemäß einem zweiten Kommissionierauftrag umfasst.

Die EP 2 581 329 B1 offenbart in diesem Zusammenhang ein System zum Kommissionieren von Aufträgen mit mindestens einer einem Auftrag zugeteilten Ware und/oder für ein Retourenmanagement. Das System umfasst eine Hängebahnanlage mit Trolleys, Aufgabeplätze, einen Batchpuffer sowie mehrere Förderstrecken und Packplätze. Gemäß dem vorgeschlagenen Verfahren werden alle Trolleys mit den Waren eines Auftrages aus dem Batchpuffer ausgelagert und einem Packplatz zugeführt, sobald alle Waren des Auftrages in dem Batchpuffer vollständig gespeichert sind beziehungsweise der Auftrag qualifiziert zum Abrufen ist.

Diese Vorgangsweise ist mit einer Reihe an Nachteilen verbunden.

Bei dem in der EP 2 581 329 B1 vorgeschlagenen Verfahren müssen mehrere Aufträge im Batchpuffer zwischengespeichert werden können. Alleine aus diesem Grund muss der Batchpuffer vergleichsweise groß ausgeführt werden. Auch die übrigen Einrichtungen im Warenlagersystem der EP 2 581 329 B1, wie zum Beispiel Sortiereinrichtungen, müssen relativ groß ausgeführt werden, da sie für die Bearbeitung des Förderstroms die Gesamtzahl an Waren mehrerer Aufträge aufnehmen müssen. Zudem ist die Verweildauer der Waren eines Auftrags im Batchpuffer vergleichsweise lang, wodurch auch der Kommissioniervorgang viel Zeit in Anspruch nimmt.

Weiterhin entstehen bei dem in der EP 2 581 329 B1 vorgeschlagenen Verfahren Abhängigkeiten zwischen den einzelnen in einem Batch abzuarbeitenden Aufträgen. Die daraus resultierende Komplexität führt zu technisch herausfordernden Steueraufgaben und vor allem zu vergleichsweise langen Bearbeitungsdauern beziehungsweise Durchlaufzeiten durch das Lager- und Kommissioniersystem. Das heißt, die Zeit von der Auftragsannahme bis zur Auslieferung der Waren ist vergleichsweise lange.

Weiterhin offenbart die DE 10 2011 116 081 B3 ein Kommissioniersystem mit einem Warenlager zur Bereitstellung von Waren, einem Warentransportsystem zum Transport der Ware mit Lagerladehilfsmitteln, einem Hängefördersystem zum Transport von Hängetaschen, einem Steuerungssystem und einer Beladestation zum Umladen der Waren von den Lagerladehilfsmitteln in die Hängetaschen gemäß Kommissionieraufträgen. Die Beladestation ist über das Warentransportsystem mit dem Warenlager verbunden und an das Hängefördersystem gekoppelt. Die Beladestation umfasst Überwachungseinrichtungen zur Erfassung einer manuellen Entnahme der Waren aus den Lagerladehilfsmitteln und manuellen Abgabe der Waren in Hängetaschen. Das Steuerungssystem bewirkt einen Austausch der Lagerladehilfsmittel und der Hängetaschen entsprechend der Entnahme und Abgabe von Waren.

Eine Aufgabe der Erfindung ist es nun, ein verbessertes Verfahren und ein verbessertes Warenlagersystem zum Kommissionieren von Waren anzugeben. Insbesondere sollen die oben genannten Nachteile überwunden werden.

Die Aufgabe der Erfindung wird mit einem Verfahren der eingangs genannten Art gelöst, bei dem

- die Auslagerung von Waren aus dem Warenlager zu jedem Kommissionierauftrag individuell und unabhängig von den anderen Kommissionieraufträgen erfolgt,

- der Transport der Transportmittel über das Hängefördersystem von der Beladestation zu jedem Kommissionierauftrag individuell und unabhängig von den anderen Kommissionieraufträgen direkt in die Sortiereinheit erfolgt und

- das Sortieren der Transportmittel in der Sortiereinheit nach den Kommissionieraufträgen erfolgt.

Weiterhin wird die Aufgabe der Erfindung durch ein Lager- und Kommissioniersystem der eingangs genannten Art gelöst, bei dem

- das Steuerungssystem dazu ausgebildet ist,

    - das Warentransportsystem für die Auslagerung der Waren aus dem Warenlager zu jedem Kommissionierauftrag individuell und unabhängig von den anderen Kommissionieraufträgen anzusteuern, und

    - das Hängefördersystem für den direkten Transport der Transportmittel von der Beladestation in die Sortiereinheit zu jedem Kommissionierauftrag individuell und unabhängig von den anderen Kommissionieraufträgen anzusteuern und

- die Sortiereinheit zum Sortieren der Transportmittel nach den Kommissionieraufträgen ausgebildet ist.

Durch die vorgeschlagenen Maßnahmen werden die eingangs erwähnten Nachteile überwunden. Insbesondere entfällt ein (Batch)Puffer zwischen der Beladestation und der Sortiereinheit. Stattdessen werden die Waren direkt von der Beladestation zur Sortiereinheit transportiert. Der für das Lager- und Kommissioniersystem benötigte Platz beziehungsweise Raum kann daher merklich reduziert werden. In gleicher Weise werden auch die von den Waren im Lager- und Kommissioniersystem zurückzulegenden Wege verkürzt, wodurch sich die Bearbeitungsdauer eines Auftrags beziehungsweise die Durchlaufzeit einer Ware durch das Lager- und Kommissioniersystem verkürzt.

Zudem werden durch die vorgeschlagene Vorgangsweise Abhängigkeiten zwischen den einzelnen Aufträgen vermieden. Stattdessen erfolgt die Auslagerung von Waren aus dem Warenlager zu jedem Kommissionierauftrag individuell und unabhängig von den anderen Kommissionieraufträgen. Auch der Transport der Transportmittel von der Beladestation erfolgt zu jedem Kommissionierauftrag individuell und unabhängig von den anderen Kommissionieraufträgen. Dadurch kann die technische Komplexität des Steuerungssystems des Lager- und Kommissioniersystems verringert werden, wodurch die Abläufe besser handhabbar werden.

Insgesamt ergibt sich durch die vorgeschlagenen Maßnahmen eine kurze Bearbeitungsdauer eines Auftrags beziehungsweise Durchlaufzeit einer Ware durch das Lager- und Kommissioniersystem. Das heißt, die Zeit von der Auftragsannahme bis zur Auslieferung der Waren ist gegenüber dem Stand der Technik verkürzt.

Die Schritte des angegebenen Verfahrens können dabei automatisch beziehungsweise automatisiert ablaufen. Insbesondere können alle Schritte des angegebenen Verfahrens automatisch beziehungsweise automatisiert ablaufen.

"Direkter Transport" von der Beladestation zur Sortiereinheit bedeutet insbesondere, dass zwischen der Beladestation und der Sortiereinheit kein (chaotisch organisierter) Puffer vorhanden ist. "Direkter Transport" kann insbesondere auch bedeuten, dass die durchschnittliche Haltezeit eines Transportmittels zwischen der Beladestation und der Sortiereinheit weniger als eine Minute beträgt. Die durchschnittliche Haltezeit kann zum Beispiel auf einen Durchrechnungszeitraum von 15 Minuten bezogen sein oder zum Beispiel auf eine Menge von 1000 Transportmittel. Demzufolge beträgt die durchschnittliche Haltezeit eines Transportmittels zwischen der Beladestation und der Sortiereinheit insbesondere weniger als eine Minute pro 15 Minuten Durchrechnungszeitraum oder pro 1000 Transportmittel. Der Transport von der Beladestation zur Sortiereinheit erfolgt daher im Wesentlichen ohne Verzögerung.

"Individuell und unabhängig von den anderen Kommissionieraufträgen" bedeutet insbesondere, dass keine Batches gebildet werden beziehungsweise auf eine Batch-Bildung verzichtet wird, also keine Waren unterschiedlicher Aufträge zusammengefasst werden. Die Auslagerung von Waren aus dem Warenlager und der Transport der Transportmittel von der Beladestation in die Sortiereinheit erfolgen daher ebenfalls im Wesentlichen ohne Verzögerung.

In einem "Lager- und Kommissioniersystem" können Waren zum Beispiel an einem Warenübernahmebereich angeliefert und übernommen werden und sodann gegebenenfalls umgepackt und in einem Lager eingelagert werden. Die Waren können auch gemäß einem Auftrag kommissioniert werden, das heißt aus dem Lager ausgelagert, zu einem Auftrag zusammengestellt und am Warenübergabebereich zum Abtransport bereitgestellt werden. Die Waren werden zwischen Warenübernahmebereich und Warenübergabebereich nicht substantiell verändert, ganz im Gegensatz zu einem Herstellungsprozess. Eine geringe Formänderung ist aber möglich, insbesondere bei nicht starren Körpern wie zum Beispiel Beuteln oder Säcken oder aber auch bei anderen nachgiebigen Verpackungen, etwa aus Karton oder Kunststoff.

"Waren" sind allgemein Objekte des Warenhandels und werden am Warenübernahmebereich angeliefert und am Warenübergabebereich gemäß einem Auftrag zu einem Kunden abtransportiert. Unter einer "Ware" wird im Rahmen der Erfindung insbesondere ein einzeln handhabbares Objekt beziehungsweise eine einzeln handhabbare Gruppe von Objekten verstanden.

Unter einem "Warenübergabebereich" ist jener Bereich zu verstehen, in dem Waren aus dem Lager- und Kommissioniersystem abgeführt werden, also insbesondere ein Warenausgang.

Unter einem "Warenübernahmebereich" ist jener Bereich zu verstehen, in dem dem Lager- und Kommissioniersystem Waren zugeführt werden, also insbesondere ein Wareneingang. Im Speziellen können angelieferte Warenträger (z.B. Paletten, Kartons, etc.) manuell oder automatisiert vereinzelt werden. Man spricht bei diesem Vorgang auch von "Depalettieren".

Ein "Lagerplatz" ist ein Bereich im Lager- und Kommissioniersystem, an dem eine Ware gelagert werden kann. Ein "Lagerbereich" ist ein Bereich im Lager- und Kommissioniersystem, welcher eine Vielzahl an Lagerplätzen zum Lagern der Waren aufweist. Beispielsweise kann der Lagerbereich als ortsfestes oder mobiles Lagerregal ausgebildet sein, das eine Vielzahl an Lagerplätzen nebeneinander und übereinander bereitstellt. Denkbar ist aber auch, dass der Lagerbereich ein Bereich am Fußboden des Lager- und Kommissioniersystems ist, der für das Abstellen und Lagern einer Ware vorgesehen beziehungsweise reserviert ist. Geh- und Fahrbereiche sind demnach keine Lagerbereiche, können aber an diese anschließen. Ein Lagerbereich kann auch Hängestangen zum Lagern von Hängewaren aufweisen. Die Summe der Lagerbereiche bildet das "Warenlager" des Lager- und Kommissioniersystems.

Ein "Ladehilfsmittel" dient der Lagerung und dem Transport der Waren im Lager- und Kommissioniersystem. Ladehilfsmittel verbleiben in der Regel im Lager- und Kommissioniersystem, sie können aber - wie Waren - am Warenübernahmebereich übernommen oder am Warenübergabebereich abgegeben werden.

Ein "erstes Ladehilfsmittel" dient dem Transport zumindest einer Ware eines ersten Auftrags beziehungsweise von einem ersten Lagerbereich zur Beladestation und kann insbesondere als Behälter, Karton, Tablar oder Palette ausgebildet sein. Insbesondere weist das erste Ladehilfsmittel eine oder mehrere der folgenden Eigenschaften auf:

- Ein erstes Ladehilfsmittel wird im ersten Lagerbereich stehend oder liegend gelagert und auf dem ersten Warentransportsystem stehend oder liegend transportiert. Grundsätzlich wäre aber auch denkbar, dass ein behälterförmiges Ladehilfsmittel an einem Rand auf Behälterwänden hängend transportiert wird.
- Ein erstes Ladehilfsmittel weist in der Betriebslage eine Breite, Tiefe und Höhe auf, wobei die folgende Bedingung erfüllt ist:

$$\text{Breite} + \text{Tiefe} > 2 \cdot \text{Höhe}.$$

- Ein erstes Ladehilfsmittel weist einen starren Boden und/oder starre Wände mit einem Elastizitätsmodul > 100 MPa auf.
- Eine Transportfläche, an der das erste Ladehilfsmittel Kontakt mit dem ersten Lagerbereich oder mit dem ersten Warentransportsystem hat, ist in der Betriebslage des ersten Ladehilfsmittels unter dessen Aufnahmeebene beziehungsweise Ladeebene angeordnet.
- Ein erstes Ladehilfsmittel weist keinen Haken auf und ist somit hakenlos beziehungsweise hakenfrei.

An dieser Stelle wird angemerkt, dass nicht alle ersten Ladehilfsmittel dieselben Eigenschaften aufweisen müssen, sondern erste Ladehilfsmittel auch unterschiedlich ausgebildet sein können. Erste Ladehilfsmittel können zudem mehrere Aufnahmebereiche / Aufnahmefächer aufweisen.

Der "erste Lagerbereich" dient in der vorliegenden Erfindung insbesondere zum Lagern der ersten Ladehilfsmittel. Insbesondere sind dort erste Ladehilfsmittel gelagert (und keine anderen). Beispielsweise kann der erste Lagerbereich durch Lagerregale gebildet sein und/oder oder durch andere Stellflächen für die ersten Ladehilfsmittel, im Speziellen durch Stellflächen am Fußboden. Ein "Lagerregal" weist mehrere übereinander angeordnete Ebenen mit jeweils einer Vielzahl an Lagerplätzen auf. Insbesondere kann ein Lagerregal mehrere übereinander angeordnete Regalböden aufweisen, die an Regalstehern befestigt sind. Zum Ein- und Auslagern von ersten Ladehilfsmitteln können im ersten Lagerbereich automatisiert betriebene Förderfahrzeuge vorgesehen sein.

Ein "zweites Ladehilfsmittel" dient dem Transport zumindest einer Ware eines zweiten Auftrags beziehungsweise vom zweiten Lagerbereich zur Beladestation. Das zweite Ladehilfsmittel kann insbesondere als Kleiderbügel für Hängeware ausgebildet sein. An seinem oberen Ende kann der Kleiderbügel einen Haken oder einen Führungsstück aufweisen, mit dessen Hilfe der Kleiderbügel auf Lager-Hängebahnen hängend gelagert, beziehungsweise auf dem zweiten Warentransportsystem hängend transportiert werden kann. Denkbar wäre auch, dass das zweite Ladehilfsmittel als Hängetasche ausgebildet ist. Denkbar wäre weiterhin, dass alle zweiten Ladehilfsmittel (und auch die ersten Ladehilfsmittel) unterschiedlich zu einer Hängetasche ausgebildet sind.

An dieser Stelle wird auch angemerkt, dass nicht alle zweiten Ladehilfsmittel dieselben Eigenschaften aufweisen müssen, sondern zweite Ladehilfsmittel auch unterschiedlich ausgebildet sein können. Weiterhin wird darauf hingewiesen, dass der Kleiderbügel nicht auf eine spezielle Form eingeschränkt ist und stattdessen allgemein auch als "Hängewarenträger" bezeichnet werden kann. Darüber hinaus können Kleiderbügel außen an oder innen in der Hängetasche angeordnet sein. Solche kombinierten, zweiten Ladehilfsmittel, welche sowohl eine Hängetasche aufweisen als auch Mittel zum Aufhängen eines Kleiderbügels oder auch den Kleiderbügel selbst, können besonders universell eingesetzt werden.

Der "zweite Lagerbereich" dient in der vorliegenden Erfindung insbesondere zum Lagern der zweiten Ladehilfsmittel. Insbesondere sind dort Waren auf zweiten Ladehilfsmitteln gelagert (und auf keinen anderen). Beispielsweise kann der zweite Lagerbereich Lager-Hängebahnen umfassen. Zum Ein- und Auslagern von zweiten Ladehilfsmitteln können an die Lager-Hängebahnen Transport-Hängebahnen anschließen. Im zweiten Lagerbereich können insbesondere unterschiedliche zweite Ladehilfsmittel gelagert werden, zum Beispiel sowohl Hängetaschen als auch Kleiderbügel.

Ein "drittes Ladehilfsmittel" kann insbesondere so wie ein erstes Ladehilfsmittel oder so wie ein zweites Ladehilfsmittel ausgebildet sein. Dementsprechend kann der "dritte Lagerbereich" so wie der erste Lagerbereich und/oder so wie der zweite Lagerbereich ausgebildet sein. Ein drittes Ladehilfsmittel kann auch als Hängetasche und/oder als Kleiderbügel ausgebildet sein (siehe unten).

Ein "Transportmittel" dient dem Transport der Waren von der Beladestation zur Sortiereinheit und von der Sortiereinheit zur Packstation, gegebenenfalls auch dem Transport der Waren innerhalb der Sortiereinheit. Ein Transportmittel kann insbesondere als Hängetasche ausgebildet sein oder eine solche umfassen und eine oder mehrere der folgenden Eigenschaften aufweisen:

- Eine Hängetasche wird im dritten Lagerbereich hängend gelagert und/oder auf dem Hängefördersystem hängend transportiert.
- Eine Hängetasche weist in einem aufgehängten Zustand (Betriebslage) eine Breite, Tiefe und Höhe auf, wobei die folgende Bedingung erfüllt ist:

$$\text{Breite} + \text{Tiefe} < 2 \cdot \text{Höhe.}$$

- Eine Hängetasche weist einen Boden und/oder Wände aus flexiblen Material, vorzugsweise aus einem Textil (textiler Stoff) oder einer Folie (Kunststofffolie) auf.

- Eine Stützfläche, an der die Hängetasche Kontakt mit dem dritten Lagerbereich oder mit dem Hängefördersystem hat, weist eine Hakenform oder Bügelform auf.
- Eine Stützfläche, an der die Hängetasche Kontakt mit dem dritten Lagerbereich oder mit dem Hängefördersystem hat, ist rollenförmig ausgebildet und mit einem Haken oder Bügel der Hängetasche verbunden.
- Eine Stützfläche, an der die Hängetasche Kontakt mit dem dritten Lagerbereich oder mit dem Hängefördersystem hat, ist in der Betriebslage der Hängetasche über dessen Befüllebene angeordnet.

Insbesondere umfasst eine Hängetasche eine Vorderwand, eine Rückwand, einen Boden, einen durch die Vorderwand, die Rückwand und den Boden begrenzten "Aufbewahrungsraum" und eine an der Hängetasche an einer ersten Seite ausgebildete und durch die Vorderwand, die Rückwand und den Boden begrenzte Beladeöffnung und/oder Endladeöffnung. Die Hängetasche kann an einer zweiten Seite auch einen Seitenwandanschlag aufweisen, gegen welche die Ware anlegbar ist. Insbesondere können die Vorderwand, die Rückwand und der Boden einstückig ausgebildet sein, beispielsweise durch eine Stoff- oder Gewebebahn, die an ihrem oberen Ende an einer Hängebahn / Hängestange gelagert ist und im Bodenbereich eine Schlaufe bildet. In einer Schließstellung weisen die Vorderwand und die Rückwand nur geringen Abstand zueinander auf, wodurch die Beladeöffnung und Entladeöffnung eine kleine Fläche und der Aufbewahrungsraum der Hängetasche ein kleines Volumen aufweist. Im Falle einer Stoff- oder Gewebebahn weisen ihre oberen Enden dann ebenfalls nur geringen Abstand zueinander auf, und die durch die Stoff- oder Gewebebahn gebildete Schlaufe ist eng. Die Ware kann in der Schließstellung somit auf engem Raum gelagert und transportiert werden. In einer Offenstellung weisen die Vorderwand und die Rückwand dagegen großen Abstand zueinander auf, wodurch die Beladeöffnung und Endladeöffnung eine große Fläche und der Aufbewahrungsraum der Hängetasche ein großes Volumen aufweist. Im Falle einer Stoff- oder Gewebebahn weisen ihre oberen Enden dann ebenfalls großen Abstand zueinander auf, und die durch die Stoff- oder Gewebebahn gebildete Schlaufe ist weit. In der Offenstellung kann die Hängetasche somit gut be- und entladen werden.

Die genannte Stoff- oder Gewebebahn, welche den Aufbewahrungsraum bilden, kann über einen Hängeträger mit einem Führungsstück verbunden sein, das auf der Hängebahn geführt ist. Das Führungsstück kann drehbar gelagerte Rollen aufweisen, die auf der Hängebahn abrollen, und somit als "Laufwagen" ausgebildet sein. Selbstverständlich ist das Vorsehen von Rollen an einem Führungsstück nicht zwingend, sondern dieser kann auch als "Gleitschlitten" ausgebildet sein, der auf der Hängebahn gleitet. Ein entsprechendes Führungsstück kann auch an einem Kleiderbügel (ohne Hängetasche) angeordnet sein.

Denkbar ist auch, dass eine Hängetasche oder ein Kleiderbügel einen Haken aufweisen, mit dem die Hängetasche oder der Kleiderbügel bedarfsweise an dem genannten Führungsstück (etwa in einer eigens dafür im Führungsstück vorgesehenen Bohrung oder auf einem am Führungsstück angeordneten Haken) eingehängt werden kann. Das heißt, eine Hängetasche oder ein Kleiderbügel kann bedarfsweise an einem solchen Führungsstück befestigt werden. Ein solches Führungsstück kann dann auch als "Hängeadapter" bezeichnet werden.

Eine beispielhafte Hängetasche ist etwa in dem deutschen Gebrauchsmuster DE 20 2017 106 993 U1, DE 20 2017 100 206 U1 oder der österreichischen Patentanmeldung A 50320/2018 offenbart.

An dieser Stelle wird auch angemerkt, dass nicht alle Transportmittel dieselben Eigenschaften aufweisen müssen, sondern Transportmittel auch unterschiedlich ausgebildet sein können. Transportmittel können zudem mehrere Aufbewahrungsbereiche / Aufbewahrungsfächer aufweisen. Darüber hinaus können Kleiderbügel außen an oder innen in der Hängetasche angeordnet sein. Solche kombinierten Transportmittel, welche sowohl eine Hängetasche aufweisen als auch Mittel zum Aufhängen eines Kleiderbügels oder auch den Kleiderbügel selbst, können besonders universell eingesetzt werden.

Ein "Versandladehilfsmittel" dient der Aufnahme der aus einem Transportmittel entladenen Waren. Im Speziellen kann ein Versandladehilfsmittel wie ein erstes Ladehilfsmittel aufgebaut sein beziehungsweise dessen Eigenschaften aufweisen. Versandladehilfsmittel können aber auch wie ein zweites Ladehilfsmittel aufgebaut sein beziehungsweise dessen Eigenschaften aufweisen. Waren können das Lager- und Kommissioniersystem in den genannten Versandladehilfsmitteln verlassen oder am Warenausgang aus den Versandladehilfsmitteln entladen werden.

Die "Betriebslage" eines Ladehilfsmittels oder Transportmittels ist dadurch gekennzeichnet, dass Waren darin lagerbar und mit dem Warentransportsystem oder dem Hängefördersystem transportierbar sind.

Das "Warentransportsystem" dient dem Transport der Ladehilfsmittel von den Lagerbereichen zur Beladestation. Im Speziellen dient das "erste Warentransportsystem" dem Transport der ersten Ladehilfsmittel vom ersten Lagerbereich zur Beladestation, das "zweite Warentransportsystem" dem Transport der zweiten Ladehilfsmittel vom zweiten Lagerbereich zur Beladestation und das "dritte Warentransportsystem" dem Transport der dritten Ladehilfsmittel vom dritten Lagerbereich zur Beladestation. Das dritte Warentransportsystem kann zudem dazu ausgebildet sein, dritte Ladehilfsmittel direkt (das heißt unter Umgehung der Beladestation) an das Hängefördersystem zu übergeben.

Das "Hängefördersystem" dient dem Transport der Transportmittel von der Beladestation zur Sortiereinheit und von der Sortiereinheit zur Packstation, gegebenenfalls auch dem Transport der Transportmittel innerhalb der Sortiereinheit. Ein Hängefördersystem umfasst mehrere "Hängebahnen", insbesondere "Transport-Hängebahnen".

Eine "Hängebahn" ist eine Bahn, an der Hängetaschen und/oder Kleiderbügel hängend gelagert und/oder transportiert werden können. Eine "Lager-Hängebahn" ist demnach eine Hängebahn, an der Hängetaschen und/oder Kleiderbügel hängend gelagert werden können und welche insbesondere im zweiten und/oder dritten Lagerbereich angeordnet ist. Eine "Transport-Hängebahn" ist eine Hängebahn, über die Hängetaschen und/oder Kleiderbügel hängend transportiert werden können. Wenn die Stützfläche, an der die Hängetasche oder der Kleiderbügel Kontakt mit der Hängebahn hat, hakenförmig oder bügelförmig oder als Gleitschlitten ausgebildet ist, dann gleitet der Haken oder Bügel der Hängetasche / des Kleiderbügels beim Transport über die Hängebahn. Ist die Stützfläche, an der die Hängetasche oder der Kleiderbügel Kontakt mit der Hängebahn hat, rollenförmig beziehungsweise als Laufwagen ausgebildet, dann rollt die Rolle der Hängetasche / des Kleiderbügels beim Transport über die Hängebahn.

Das Warentransportsystem und/oder das Hängefördersystem umfasst insbesondere Elemente einer "ortsfesten Fördertechnik" oder ist daraus aufgebaut. "Ortsfeste Fördertechnik" benötigt zum Warentransport fix verbaute Einrichtungen. Beispielsweise benötigt ein Heber einen Rahmen, an dem eine Hubplattform bewegt wird. Die Hubplattform alleine ist dagegen nicht funktionsfähig. Ortsfeste Fördertechnik ist insbesondere dadurch gekennzeichnet, dass sie ohne das Lösen von Befestigungen nicht aus dem Lager- und Kommissioniersystem entfernt werden kann. Unter ortsfester Fördertechnik sind insbesondere Rollenförderer, Bandförderer, Kettenförderer und dergleichen zu verstehen. Auf dem ersten Warentransportsystem werden die ersten Ladehilfsmittel insbesondere stehend transportiert. Auf dem zweiten Warentransportsystem werden die zweiten Ladehilfsmittel insbesondere hängend transportiert. Transportmittel werden auf dem Hängefördersystem ebenfalls hängend transportiert. Auf dem dritten Warentransportsystem können die Waren in gemischter Transportart transportiert werden.

Ein "Regalbediengerät" ist ein automatisiert betriebenes Förderfahrzeug zum Warentransport, das selbständig beziehungsweise fahrerlos auf Schienen fährt und als Einebenen-Regalbediengerät (auch "Shuttle" genannt) oder als Mehrebenen-Regalbediengerät ausgeführt sein kann. Ein Regalbediengerät weist insbesondere eine Transportplattform auf, auf der die zu transportierenden Waren temporär aufgenommen werden. Anstelle der Transportplattform oder zusätzlich dazu kann das Regalbediengerät auch eine (teleskopierbare) Hängestange beziehungsweise Hängebahn zur Aufnahme von Hängetaschen und/oder Kleiderbügeln aufweisen. Beispielsweise kann die Transportplattform/Hängestange fix am Regalbediengerät befestigt sein, die Transportplattform/Hängestange kann aber auch vertikal und/oder seitlich relativ zu einem Fahrgestell des Regalbediengerät beweglich sein, um beispielsweise Waren in ein Lagerregal einlagern und aus dem Lagerregal auslagern zu können. Am Fahrgestell sind Räder angeordnet, von denen wenigstens eines angetrieben ist. Weiterhin umfasst ein Regalbediengerät auch eine elektronische Steuerung zum Empfang von Befehlen von einer übergeordneten Steuerung und zum Steuern/Regeln der Bewegungen des Regalbediengeräts. Regalbediengeräte benötigen für ihren Betrieb Elemente ortsfester Fördertechnik (nämlich die Schienen). Aus diesem Grund werden Regalbediengeräte im Rahmen der Erfindung der ortsfesten Fördertechnik zugerechnet.

Eine "Beladevorrichtung" ist eine Vorrichtung beziehungsweise ein Bereich oder Platz, an der oder dem Waren von Ladehilfsmitteln in Transportmittel umgeladen werden können. Für die Steuerung des Beladevorgangs der Waren kann die Beladevorrichtung eine Belade-Steuerung aufweisen. Denkbar wäre aber auch, dass der Beladevorgang alternativ oder zusätzlich durch das Steuerungssystem des Lager- und Kommissioniersystems angesteuert wird. Eine "Beladestation" umfasst mehrere Beladevorrichtungen beziehungsweise bildet die Gesamtheit der Beladevorrichtungen.

Eine "Packvorrichtung" ist eine Vorrichtung beziehungsweise ein Bereich oder Platz, an der oder dem Waren von den Transportmitteln in oder auf ein Versandladehilfsmittel geladen werden können. Für die Steuerung des Packvorgangs kann die Packvorrichtung eine Pack-Steuerung aufweisen. Denkbar wäre aber auch, dass der Packvorgang alternativ oder zusätzlich durch das Steuerungssystem des Lager- und Kommissioniersystems angesteuert wird. Eine "Packstation" umfasst mehrere Packvorrichtungen beziehungsweise bildet die Gesamtheit der Packvorrichtungen.

Eine Beladevorrichtung und eine Packvorrichtung können jeweils für den automatischen, manuellen oder gemischt automatisch/manuellen Betrieb ausgebildet sein, wobei der manuelle Betrieb insbesondere rechnergestützt sein kann. Dazu können die genannten Vorrichtungen verschiedene Funktionseinheiten umfassen, beispielsweise einen Roboter und/oder eine Kippvorrichtung zum Kippen eines ersten Ladehilfsmittels und/oder eine Vorrichtung zum Öffnen einer Hängetasche an einer Andienposition (z.B. aus Gründen der Ergonomie) sowie eine Ausgabeeinheit (z.B. ein Display oder eine Sprachausgabe-Einheit), eine Eingabeeinheit (z.B. eine Tastatur, ein Touch-Display oder eine Spracheingabe-Einheit) und/oder eine Erfassungseinheit (z.B. einen Scanner). Im automatischen oder gemischt automatisch/manuellen Betrieb kann der Roboter und/oder die Kippvorrichtung angewiesen werden, einen bestimmten Bewegungsablauf auszuführen. Im manuellen oder gemischt automatisch/manuellen Betrieb kann ein Arbeiter mit Hilfe der Ausgabeeinheit angewiesen werden, einen bestimmten Vorgang auszuführen. Über die Eingabeeinheit und/oder die Erfassungseinheit kann der Arbeiter eine Rückmeldung abgeben. Der obige Vorgang erfolgt also manuell rechnergestützt. Die genannten Funktionseinheiten können durch eine Steuerung der jeweiligen Vorrichtung angesteuert werden, also durch die Belade-Steuerung der Beladevorrichtung oder die Pack-Steuerung der Packvorrichtung. Denkbar wäre aber auch, dass die genannten Funktionseinheiten alternativ oder zusätzlich vom Steuerungssystem des Lager- und Kommissioniersystems angesteuert werden.

Im "automatischen" Betrieb werden vorgegebene Bewegungsabläufe selbständig ausgeführt, z.B. von einem "Roboter". Im "automatisierten Betrieb" kann eine Einrichtung ganz oder teilweise ohne Mitwirkung des Menschen arbeiten. "Automatisierter" Betrieb kann demnach automatischer und/oder manuell rechnergestützter Betrieb sein. Im "manuell rechnergestützten" Betrieb erhält ein Arbeiter Anweisungen von einer Steuerung und gibt gegebenenfalls Rückmeldungen an die Steuerung ab. Im "gemischt manuell/automatischen" Betrieb werden Teile eines Vorgangs automatisch (z.B. von einem Roboter) ausgeführt, andere Teile von einem Arbeiter (z.B. manuell rechnergestützt).

Eine "Andienposition" ist generell eine Position, an der ein Ladehilfsmittel, ein Transportmittel, oder ein Versandladehilfsmittel angedient beziehungsweise bereitgestellt wird. An dieser Position ist ein Be- und/oder Entladen des betreffenden Ladehilfsmittels oder Transportmittels möglich. Beispielsweise kann die Andienposition durch eine Halteposition für ein Ladehilfsmittel auf dem Warentransportsystem oder durch eine Halteposition für ein Transportmittel auf dem Hängefördersystem gebildet sein.

Eine "Belade-Andienposition" ist demnach eine Andienposition, welche an einer Beladevorrichtung angeordnet ist beziehungsweise Teil derselben ist. Eine "Pack-Andienposition" ist demnach eine Andienposition, welche an einer Packvorrichtung angeordnet ist beziehungsweise Teil derselben ist.

Eine "Sortiereinheit" ist eine Einrichtung, mit der Waren (genauer gesagt die Transportmittel, welche die Waren enthalten) in eine vorgegebene oder vorgebbare Reihenfolge gebracht werden können. Die Sortierung kann insbesondere in mehreren "Sortierstufen" erfolgen, die hintereinander durchlaufen werden. Eine Sortiereinheit oder Sortierstufe kann auch mehrere "Sortierbahnen" aufweisen, in welchen die Waren / Transportmittel temporär aufgenommen werden. Beispielsweise kann die Sortiereinheit als Matrix-Sorter ausgebildet sein.

Eine "Versandeinrichtung" dient der Bereitstellung von beladenen Versandladehilfsmitteln am Warenübergabebereich beziehungsweise am Warenausgang. In einem einfachen Fall ist die Versandeinrichtung durch eine von der Pack-Vorrichtung wegführende Fördertechnik gebildet.

Ein "Warenvorratslager" ist ein Lagerbereich, in dem vorwiegend oder ausschließlich Neuware gelagert wird. "Neuware" ist Ware, die noch nicht ausgeliefert wurde und für einen Auftrag bereitsteht.

Ein "Retourwarenlager" ist ein Lagerbereich, in dem vorwiegend oder ausschließlich Retourware gelagert wird. "Retourware" ist Ware, die bereits ausgeliefert wurde, jedoch vom Empfänger wieder zurückgeschickt wurde, und für einen neuen Auftrag bereitsteht.

Ein "Auftrag zum Kommissionieren von Waren" (kurz "Kommissionierauftrag" oder "Auftrag") umfasst im Rahmen der Erfindung zumindest eine Auftragszeile, deren zugeordnete Waren in einem Lagerbereich gelagert werden. Beispielsweise können Socken im ersten Lagerbereich in ersten Ladehilfsmitteln lagern, die als Behälter ausgebildet sind. Hemden können dagegen im zweiten Lagerbereich auf zweiten Ladehilfsmitteln lagern, die als Kleiderbügel ausgebildet sind. Ein Auftrag wird elektronisch erfasst und liegt als Datensatz vor. Beispielsweise erfolgt die Erfassung eines Auftrags im Steuerungssystem des Lager- und Kommissioniersystems. Denkbar wäre aber auch, dass die Erfassung eines Auftrags durch einen eigenen Auftragsrechner erfolgt, der mit dem Steuerungssystem des Lager- und Kommissioniersystems verbunden ist. Eine Bestellung eines Kunden kann einen Auftrag oder mehrere Aufträge umfassen.

Eine "Auftragszeile" spezifiziert Ware (zumindest) nach ihrer Warentype und ihrer zu kommissionierenden Stückzahl. Beispielsweise kann eine Auftragszeile: "1 Stück, Bandnudeln, 1 kg" oder "10 Stück, Mineralwasser 1l" beinhalten. Die Ware kann grundsätzlich unterschiedlicher Art sein und insbesondere auch Kleidungsstücke umfassen. Beispielsweise kann eine Auftragszeile daher auch: "1 Stück, Hemd, weiß, Größe 42" oder "3 Stück, Jeanshose, Größe 34/34" oder "10 Stück, Socken, schwarz, Größe 43" beinhalten. Ein Auftrag kann eine einzige Auftragszeile umfassen, beispielweise "10 Stück, Mineralwasser 1l", oder mehrere Auftragszeilen, zum Beispiel "1 Stück, Hemd, weiß, Größe 42" und "3 Stück, Jeanshose, Größe 34/34".

Eine "Warentype" gibt die Art einer Ware an. Beispielsweise kann als Warentype: "Bandnudeln, 1 kg" oder "Mineralwasser 1l" vorgesehen sein. Die Warentype kann insbesondere auch Kleidungsstücke umfassen. Beispielsweise kann als Warentype: "Hemd, weiß, Größe 42" oder "Jeanshose, Größe 34/34" oder "Socke, schwarz, Größe 43" vorgesehen sein.

Ein "Steuerungssystem" des Lager- und Kommissioniersystems dient insbesondere zur Erfassung eines Auftrags und zur Ausführung desselben. Zu diesem Zweck ist das Steuerungssystem steuerungstechnisch mit Elementen des Lager- und Kommissioniersystems verbunden, insbesondere mit der Fördertechnik des Lager- und Kommissioniersystems. Das Steuerungssystem kann insbesondere einen Rechner mit einem darauf ablaufenden Programm umfassen und zumindest in Teilen durch eine Speicherprogrammierbare Steuerung gebildet sein.

Unter "Kommissionieren" ist im Rahmen der Erfindung das Zusammenstellen von Waren für einen Kommissionierauftrag zu verstehen, im engeren Sinn das Beladen eines Versandladehilfsmittels mit der Ware des ersten Auftrags und/oder der Ware des zweiten Auftrags.

"Retail" betrifft Warensendungen an den Zwischenhandel oder Endverkäufer. "E-Commerce" betrifft Warensendungen an den Endkunden. Aufträge des Zwischenhandels / Endverkäufers sind umfangreich und beinhalten häufig viele Waren gleicher Warentype, wohingegen Aufträge der Endkunden weniger umfangreich sind und wenige Waren gleicher Warentype beinhalten.

Vorteilhafte Ausgestaltungen und Weiterbildungen der Erfindung ergeben sich nun aus den Unteransprüchen sowie aus der Beschreibung in Zusammenschau mit den Figuren.

Vorteilhaft ist ein Verfahren, umfassend die zusätzlichen Schritte:

- Auslagerung von Waren aus dem Warenlager zu jedem Kommissionierauftrag individuell und unabhängig von den anderen Kommissionieraufträgen, wobei das Auslagern umfasst

- einen Transport einer Ware aus dem Warenlager gemäß einem dritten Kommissionierauftrag zur Beladestation,

- Bereitstellung der Ware gemäß dem dritten Kommissionierauftrag an der Beladestation,

- Bereitstellung von einem Transportmittel des Hängefördersystems an der Beladestation,

- Umladen der Ware zum dritten Kommissionierauftrag in das Transportmittel des Hängefördersystems und

- Transport des Transportmittels über das Hängefördersystem von der Beladestation unter Umgehung der Sortiereinheit, direkt zu der Packstation.

Auf diese Weise können auch Waren gemäß einem dritten Kommissionierauftrag kommissioniert werden. Ein Sortieren der Waren entfällt bei dieser Variante, wodurch die Bearbeitungsdauer eines Auftrags beziehungsweise die Durchlaufzeit einer Ware durch das Lager- und Kommissioniersystem noch weiter verkürzt wird.

Vorteilhaft ist es auch, wenn die Hängeware aus dem dritten Lagerbereich durch das Hängefördersystem zur Sortiereinheit oder Packstation transportiert werden. Demzufolge ist es bei einem Lager- und Kommissioniersystem auch von Vorteil, wenn das Steuerungssystem dazu ausgebildet ist, das Hängefördersystem für den Transport der Hängeware aus dem dritten Lagerbereich zur Sortiereinheit oder zur Packeinheit anzusteuern. Die Sortiereinheit kann somit bedarfsweise umgangen werden. Ein Sortieren der Waren kann bei dieser Variante entfallen, wodurch die Bearbeitungsdauer eines Auftrags beziehungsweise Durchlaufzeit einer Ware durch das Lager- und Kommissioniersystem verkürzt wird.

Günstig ist es, wenn das Warenlager einen ersten Lagerbereich mit ersten Lagerplätzen und einem automatisiert betriebenen ersten Warentransportsystem zum Transport der Waren zwischen den ersten Lagerplätzen und der Beladestation umfasst, wobei die Waren bei der Auslagerung aus dem ersten Lagerbereich vom ersten Warentransportsystem von den ersten Lagerplätzen übernommen und vom ersten Warentransportsystem zur Beladestation transportiert werden. Demzufolge ist es bei dem Lager- und Kommissioniersystem auch von Vorteil, wenn das Steuerungssystem dazu ausgebildet ist, das erste Warentransportsystem bei der Auslagerung der Waren aus dem ersten Lagerbereich zur Übernahme der Waren von den ersten Lagerplätzen und zum Transport der Waren zur Beladestation anzusteuern. Auf diese Weise können die Waren automatisch vom ersten Lagerbereich zur Beladestation transportiert werden.

Günstig ist es weiterhin, wenn die Liegewaren im ersten Lagerbereich mit ersten Ladehilfsmitteln gelagert werden. Auf diese Weise ist die Lagerung von Liegewaren im ersten Lagerbereich platzsparend möglich. Insbesondere sind in einem ersten Ladehilfsmittel mehrere Waren gelagert.

Günstig ist es darüber hinaus, wenn das Warenlager einen zweiten Lagerbereich mit zweiten Lagerplätzen und einem automatisiert betriebenen zweiten Warentransportsystem zum Transport der Waren zwischen den zweiten Lagerplätzen und der Beladestation umfasst, wobei die Waren bei der Auslagerung aus dem zweiten Lagerbereich vom zweiten Warentransportsystem von den zweiten Lagerplätzen übernommen und vom zweiten Warentransportsystem zur Beladestation transportiert werden. Demzufolge ist es bei dem Lager- und Kommissioniersystem auch von Vorteil, wenn das Steuerungssystem dazu ausgebildet ist, das zweite Warentransportsystem bei der Auslagerung der Waren aus dem zweiten Lagerbereich zur Übernahme der Waren von den zweiten Lagerplätzen und zum Transport der Waren zur Beladestation anzusteuern. Auf diese Weise können die Waren auch vom zweiten Lagerbereich automatisch zur Beladestation transportiert werden.

Günstig ist es zudem, wenn die Hängewaren im zweiten Lagerbereich mit zweiten Ladehilfsmitteln gelagert werden. Auf diese Weise ist auch die Lagerung von Hängewaren im zweiten Lagerbereich platzsparend möglich. Insbesondere ist auf einem zweiten Ladehilfsmittel genau eine Ware gelagert.

Günstig ist es auch, wenn das Warenlager einen dritten Lagerbereich mit dritten Lagerplätzen und einem dritten Warentransportsystem zum Transport der Waren zwischen den dritten Lagerplätzen und der Beladestation umfasst, wobei die Waren bei der Auslagerung aus dem dritten Lagerbereich vom dritten Warentransportsystem von den dritten Lagerplätzen übernommen und vom dritten Warentransportsystem zur Beladestation transportiert werden. Demzufolge ist es bei dem Lager- und Kommissioniersystem auch von Vorteil, wenn das Steuerungssystem dazu ausgebildet ist, das dritte Warentransportsystem bei der Auslagerung der Waren aus dem dritten Lagerbereich zur Übernahme der Waren von den dritten Lagerplätzen und zum Transport der Waren zur Beladestation anzusteuern. Auf diese Weise können die Waren auch vom dritten Lagerbereich automatisch zur Beladestation transportiert werden.

Günstig ist es außerdem, wenn die Liegewaren und Hängewaren im dritten Lagerbereich mit dritten Ladehilfsmitteln gelagert werden. Dadurch ist die Lagerung von Liegewaren und Hängewaren im dritten Lagerbereich auf flexible Weise möglich. Insbesondere können die dritten Ladehilfsmittel so wie erste Ladehilfsmittel oder so wie zweite Ladehilfsmittel aufgebaut sein oder auch als Hängetasche ausgebildet sein.

Vorteilhaft ist es, wenn die Beladestation eine erste Beladevorrichtung und eine zweite Beladevorrichtung umfasst, wobei die Waren bei der Auslagerung aus dem ersten Lagerbereich vom ersten Warentransportsystem von den ersten Lagerplätzen übernommen und vom ersten Warentransportsystem zur ersten Beladevorrichtung transportiert werden und die Waren bei der Auslagerung aus dem zweiten Lagerbereich vom zweiten Warentransportsystem von den zweiten Lagerplätzen übernommen und vom zweiten Warentransportsystem zur zweiten Beladevorrichtung transportiert werden. Demgemäß ist es auch von Vorteil, wenn das Steuerungssystem dazu ausgebildet ist, das erste Warentransportsystem bei der Auslagerung der Waren aus dem ersten Lagerbereich zur Übernahme der Waren von den ersten Lagerplätzen und zum Transport der Waren zur ersten Beladevorrichtung anzusteuern und das zweite Warentransportsystem bei der Auslagerung der Waren aus dem zweiten Lagerbereich zur Übernahme der Waren von den zweiten Lagerplätzen und zum Transport der Waren zur zweiten Beladevorrichtung anzusteuern. Auf diese Weise kann die Beladestation unterschiedlich aufgebaute Beladevorrichtungen aufweisen, welche entweder für die Manipulation der ersten Ladehilfsmittel oder für die Manipulation der zweiten Ladehilfsmittel speziell ausgebildet sind.

Vorteilhaft ist es darüber hinaus, wenn die Beladestation eine erste Beladevorrichtung und eine zweite Beladevorrichtung umfasst, wobei die Waren bei der Auslagerung aus dem dritten Lagerbereich vom dritten Warentransportsystem von den dritten Lagerplätzen übernommen und vom dritten Warentransportsystem wahlweise zur ersten Beladevorrichtung oder zweiten Beladevorrichtung transportiert werden. Demzufolge ist es auch von Vorteil, wenn das Steuerungssystem dazu ausgebildet ist, das dritte Warentransportsystem bei der Auslagerung der Waren aus dem dritten Lagerbereich zur Übernahme der Waren von den dritten Lagerplätzen und zum wahlweisen Transport der Waren zur ersten Beladevorrichtung oder zur zweiten Beladevorrichtung anzusteuern. Auf diese Weise kann die für das dritte Ladehilfsmittel jeweils geeignetste Beladevorrichtung für das Umladen der Waren in ein Transportmittel ausgewählt werden. Der Beladevorgang kann daher für unterschiedlich aufgebaute dritte Ladehilfsmittel rasch und störungsfrei erfolgen.

Vorteilhaft ist es zudem, wenn das Warenlager einen dritten Lagerbereich mit dritten Lagerplätzen und einem dritten Warentransportsystem zum Transport der Waren zwischen den dritten Lagerplätzen und dem Hängefördersystem umfasst, wobei die Waren im dritten Lagerbereich Hängewaren umfassen, welche mit dem dritten Ladehilfsmittel gelagert werden, und die Hängeware bei der Auslagerung aus dem dritten Lagerbereich vom dritten Warentransportsystem von den dritten Lagerplätzen übernommen und vom dritten Warentransportsystem (unter Umgehung der Beladestation direkt) an das Hängefördersystem übergeben wird. Demzufolge ist es bei einem Lager- und Kommissioniersystem auch von Vorteil, wenn das Steuerungssystem dazu ausgebildet ist, das dritte Warentransportsystem bei der Auslagerung der Waren aus dem dritten Lagerbereich zur Übernahme der Waren von den dritten Lagerplätzen und zur Übergabe der Waren an das Hängefördersystem anzusteuern. Auf diese Weise kann ein Umladen der Waren an der Beladestation von einem dritten Ladehilfsmittel in ein Transportmittel entfallen. Stattdessen fungiert in diesem Fall das dritte Ladehilfsmittel selbst als Transportmittel. Die Bearbeitungsdauer eines Auftrags beziehungsweise Durchlaufzeit einer Ware durch das Lager- und Kommissioniersystem kann somit noch weiter verkürzt werden.

Günstig ist es, wenn das dritte Ladehilfsmittel aus dem dritten Lagerbereich durch

- eine Hängetasche mit einem Hängeträger zum Transport durch das dritte Warentransportsystem und einem Aufbewahrungsraum zur Aufnahme der Ware, und/oder

- eine Hängetasche mit einem Hängeträger zum Transport durch das dritte Warentransportsystem und mit einem Aufbewahrungsraum zur Aufnahme der Ware und einem Transporthaken zum Aufhängen der Ware, und/oder

- einen Hängeadapter zum Aufhängen der Ware

gebildet ist.

Auf diese Weise können Liegewaren im dritten Lagerbereich in einer Hängetasche gelagert werden, oder Hängewaren in einer Hängetasche oder Hängewaren ohne Hängetasche, beispielsweis auf Hängeadaptern.

Günstig ist es außerdem, wenn zumindest einer der ersten und zweiten Lagerbereiche als Warenvorratslager und der dritte Lagerbereich als Retourenwarenlager ausgebildet sind. Auf diese Weise ist die effiziente Handhabung von Neuware und Retourware möglich. Neuware wird ja in der Regel in hoher Stückzahl sortiert nach Warentype an das Lager- und Kommissioniersystem angeliefert, wohingegen Retourware in der Regel Einzelstücke unterschiedlicher Warentypen umfasst. Retouren können im dritten Lagerbereich insbesondere in Hängetaschen gelagert werden, vorzugsweise vereinzelt.

Vorteilhaft ist ein Verfahren, umfassend die zusätzlichen Schritte:

- Analyse der im Warenlager zumindest in einem der ersten und zweiten Lagerbereiche und dem dritten Lagerbereich gelagerten Ware durch das Steuerungssystem,

- Ermittlung der zu einem der Kommissionieraufträge erforderlichen Ware,

- Auslagerung der Ware aus dem dritten Lagerbereich, wenn in der Analyse festgestellt, dass sowohl in einem der ersten und zweiten Lagerbereiche als auch im dritten Lagerbereich die erforderliche Ware gelagert ist.

Auf diese Weise wird Ware bevorzugt aus dem dritten Lagerbereich ausgelagert. Lagert im dritten Lagerbereich Retourware, so wird diese bevorzugt vorrangig wieder ausgeliefert. Der dritte Lagerbereich kann daher klein gehalten werden.

Vorteilhaft ist aber auch ein Verfahren, umfassend die zusätzlichen Schritte:

- Analyse der im Warenlager zumindest in einem der ersten und zweiten Lagerbereiche und dem dritten Lagerbereich gelagerten Ware durch das Steuerungssystem,

- Ermittlung der zu einem der Kommissionieraufträge erforderlichen Ware,

- Auslagerung der Ware aus einem der ersten und zweiten Lagerbereiche, wenn in der Analyse festgestellt wurde, dass sowohl in einem der ersten und zweiten Lagerbereiche als auch im dritten Lagerbereich die erforderliche Ware gelagert ist.

Auf diese Weise wird Ware bevorzugt vorrangig aus dem ersten und zweiten Lagerbereich ausgelagert. Lagert im ersten und zweiten Lagerbereich Neuware, so wird diese bevorzugt ausgeliefert. Der erste und zweite Lagerbereich kann daher klein gehalten werden.

Günstig ist es, wenn nach dem Umladen der Ware zu einem der ersten und zweiten Kommissionieraufträge das erste und/oder zweite Ladehilfsmittel zurück in das Warenlager transportiert wird, sofern im ersten und/oder zweiten Ladehilfsmittel noch Ware enthalten ist. Dadurch stehen aktuell nicht benötigte Waren in Folge für einen weiteren Kommissionierauftrag zur Verfügung.

Günstig ist es, wenn das Transportmittel ein Kennzeichnungsmerkmal aufweist und durch das Steuerungssystem von der Ware ein Kennzeichnungsmerkmal erfasst wird, wobei nach dem Umladen der Ware in das Transportmittel, von einem Erfassungsmittel das Kennzeichnungsmerkmal des Transportmittels automatisch erfasst und durch das Steuerungssystem die Ware datentechnisch mit dem zugehörigen Transportmittel verknüpft wird. Insbesondere ist es von Vorteil, wenn jedes Transportmittel ein kontaktlos auslesbares Kennzeichnungsmerkmal mit einer eindeutigen Identifikationskennung aufweist, insbesondere ein optisch oder mittels Funk auslesbares Kennzeichnungsmerkmal. Dadurch kann eine Ware leicht innerhalb des Lager- und Kommissioniersystems lokalisiert werden, und auch der Kommissioniervorgang (konkret das Beladen eines Versandladehilfsmittels) kann auf einfache Weis erfolgen. Beispielsweise kann das Kennzeichnungsmerkmal durch Daten gebildet sein, die auf einem RFID-Tag ("Radio Frequency Identification Tag") des Transportmittels gespeichert sind oder in Form eines eindimensionalen oder zweidimensionalen Barcodes auf dem Transportmittel angebracht sind. Das Erfassungsmittel ist dann ein Gerät zum Lesen des RFID-Tags beziehungsweise des Barcodes.

Günstig ist es, wenn wenigstens eines der Transportmittel mit mehr als einer Ware zu einem der ersten und zweiten Kommissionieraufträge beladen wird. Auf diese Weise kann die Anzahl der für einen Kommissionierauftrag eingesetzten Transportmittel und damit die Größe des Hängefördersystems verringert werden.

Vorteilhaft ist es zudem, wenn das Sortieren der Transportmittel in der Sortiereinheit das Sortieren der Transportmittel gemäß einer Reihenfolge der Waren innerhalb des jeweiligen Kommissionierauftrags umfasst. Auf diese Weise kommen die Transportmittel je Kommissionierauftrag in der gewünschten Reihenfolge an der Packstation an.

Günstig ist es auch, wenn die Waren an der Packstation aus den Transportmitteln entnommen und in Versandladehilfsmittel umgeladen werden. Günstig ist es in diesem Zusammenhang weiterhin, wenn nach dem Umladen der einen oder mehreren Waren zu einem der ersten, zweiten und dritten Kommissionieraufträge aus dem Transportmittel oder den Transportmitteln in das zumindest eine Versandladehilfsmittel, das zumindest eine Versandladehilfsmittel zu einer Versandeinrichtung transportiert wird. Auf diese Weise können speziell für den Versand ausgebildete Versandladehilfsmittel eingesetzt werden, insbesondere auch Einweg-Gebinde, welche den Bereich des Lager- und Kommissioniersystems verlassen, beispielsweise an einer als Laderampe für Lastkraftwagen ausgebildeten Versandeinrichtung.

Günstig ist es darüber hinaus, wenn das erste Warentransportsystem durch eine Auslagerfördertechnik zum Transport der Waren von den ersten Lagerplätzen zur Beladestation und eine Einlagerfördertechnik zum Transport der Waren von der Beladestation zu den ersten Lagerplätzen gebildet ist. Auf diese Weise kann das erste Warentransportsystem sowohl zum Einlagern als auch zum Auslagern von Waren eingesetzt werden, insbesondere auch zum Rückfördern teilweise oder vollständig entladener erster Ladehilfsmittel.

Günstig ist es weiterhin, wenn das zweite Warentransportsystem durch eine Auslagerfördertechnik zum Transport der Waren von den zweiten Lagerplätzen zur Beladestation und eine Einlagerfördertechnik zum Transport der Waren von der Beladestation zu den zweiten Lagerplätzen gebildet ist. Auf diese Weise kann auch das zweite Warentransportsystem sowohl zum Einlagern als auch zum Auslagern von Waren eingesetzt werden, insbesondere auch zum Rückfördern teilweise oder vollständig entladener zweiter Ladehilfsmittel.

Vorteilhaft ist es, wenn die Sortiereinheit eine erste Sortierstufe aufweist und die erste Sortierstufe eine oder mehrere Sortierbahnen aufweist, wobei die erste Sortierstufe dazu ausgebildet ist, je Sortierbahn die Transportmittel eines einzigen ersten Kommissionierauftrags oder einzigen zweiten Kommissionierauftrags zu puffern. Auf diese Weise kann der Sortiervorgang besonders effizient und rasch ausgeführt werden. Insbesondere ist dadurch auch ein Sortieren der Transportmittel gemäß einer Reihenfolge der Waren innerhalb des jeweiligen Kommissionierauftrags möglich.

Vorteilhaft ist es darüber hinaus, wenn die Sortiereinheit eine erste Sortierstufe und zumindest eine dieser nachfolgende zweite Sortierstufe aufweist, wobei die zweite Sortierstufe zur Sortierung der Transportmittel zu einem der ersten und zweiten Kommissionieraufträge nach einer vorgegebenen Reihenfolge ausgebildet ist. Auf diese Weise kommen die Transportmittel je Kommissionierauftrag in der gewünschten Reihenfolge an der Packstation an.

An dieser Stelle wird angemerkt, dass sich die zum vorgestellten Lager- und Kommissioniersystem offenbarten Varianten und Vorteile gleichermaßen auf das vorgestellte Verfahren beziehen und umgekehrt.

Zum besseren Verständnis der Erfindung wird diese anhand der nachfolgenden Figuren näher erläutert.

Es zeigen jeweils in stark vereinfachter, schematischer Darstellung:

Fig. 1    eine erste Ausführungsform eines schematisch dargestellten Lager- und Kommissioniersystems und

Fig. 2    eine zweite Ausführungsform eines etwas detaillierter dargestellten Lager- und Kommissioniersystems.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

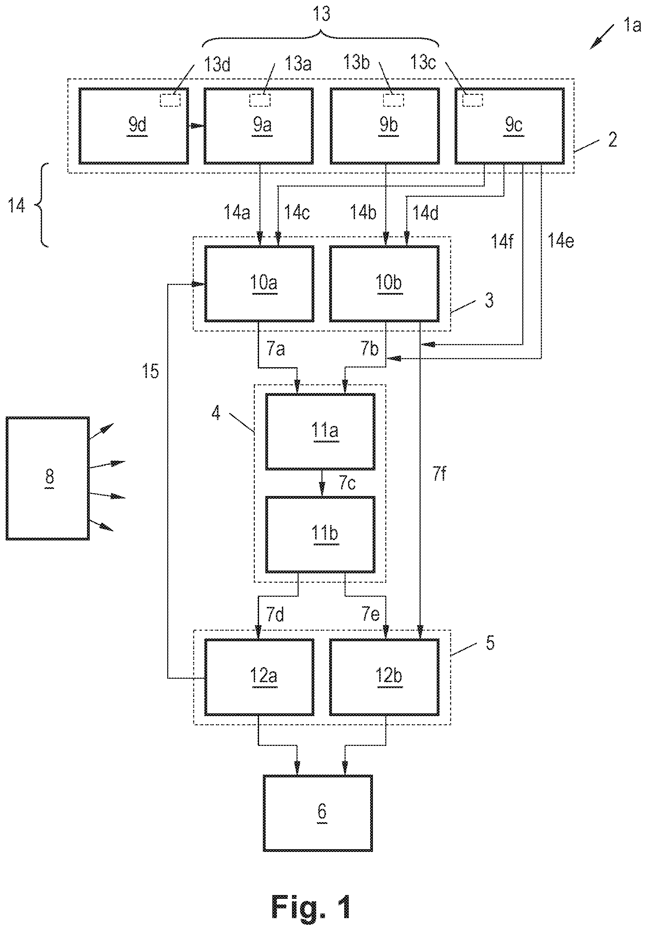

Die Fig. 1 zeigt eine schematische Darstellung eines beispielhaften Lager- und Kommissioniersystems 1a, welches ein Warenlager 2, eine Beladestation 3, eine Sortiereinheit 4, eine Packstation 5, eine Versandeinrichtung 6, ein Hängefördersystem 7a..7f sowie ein Steuerungssystem 8 umfasst. Eine Puffervorrichtung zum Sammeln von Waren zu verschiedenen Kommissionieraufträgen, welche nach dem Stand der Technik zwischen der Beladestation 3 und der Sortiereinheit 4 angeordnet ist, ist dagegen nicht vorgesehen.

Das Warenlager 2 umfasst in diesem Beispiel vier unterschiedliche Lagerbereiche 9a..9d, die Beladestation 3 eine erste Beladevorrichtung 10a und eine zweite Beladevorrichtung 10b, die Sortiereinheit 4 eine erste Sortierstufe 11a und zumindest eine daran anschließende zweite Sortierstufe 11b, und die Packstation 5 eine erste Packvorrichtung 12a und eine zweite Packvorrichtung 12b.

Die Lagerbereiche 9a..9d weisen jeweils mehrere Lagerplätze 13 auf, die in der Fig. 1 symbolisch dargestellt sind. Konkret umfasst der erste Lagerbereich 9a mehrere erste Lagerplätze 13a, der zweite Lagerbereich 9b mehrere zweite Lagerplätze 13b, der dritte Lagerbereich 9c mehrere dritte Lagerplätze 13c und der vierte Lagerbereich 9d mehrere vierte Lagerplätze 13d.

Das Hängefördersystem 7a..7f verbindet die Beladestation 3, die Sortiereinheit 4 und die Packstation 5. Konkret verbindet ein erster Abschnitt 7a des Hängefördersystems die erste Beladevorrichtung 10a mit der ersten Sortierstufe 11a, ein zweiter Abschnitt 7b des Hängefördersystems die zweite Beladevorrichtung 10b mit der ersten Sortierstufe 11a, ein dritter Abschnitt 7c des Hängefördersystems die erste Sortierstufe 11a mit der zweiten Sortierstufe 11b, ein vierter Abschnitt 7d des Hängefördersystems die zweite Sortierstufe 11b mit der ersten Packvorrichtung 12a, ein fünfter Abschnitt 7e des Hängefördersystems die zweite Sortierstufe 11b mit der zweiten Packvorrichtung 12b und ein sechster Abschnitt 7f des Hängefördersystems die zweite Beladevorrichtung 10b mit der zweiten Packvorrichtung 12b.

Weiterhin ist in der Fig. 1 ein Warentransportsystem 14 dargestellt. Konkret zeigt die Fig. 1 ein erstes Warentransportsystem 14a, welches den ersten Lagerbereich 9a mit der Beladestation 3 verbindet (konkret mit der ersten Beladevorrichtung 10a), ein zweites Warentransportsystem 14b, welches den zweiten Lagerbereich 9b mit der Beladestation 3 verbindet (konkret mit der zweiten Beladevorrichtung 10b), einen ersten Abschnitt 14c eines dritten Warentransportsystems, welcher den dritten Lagerbereich 9c mit der ersten Beladevorrichtung 10a der Beladestation 3 verbindet, und einen zweiten Abschnitt 14d des dritten Warentransportsystems, welches den dritten Lagerbereich 9c mit der zweiten Beladevorrichtung 10b der Beladestation 3 verbindet. Das Warentransportsystem 14 umfasst weiterhin einen optionalen dritten Abschnitt 14e des dritten Warentransportsystems, welcher in den zweiten Abschnitt 7b des Hängefördersystems mündet, wodurch der dritte Lagerbereich 9c direkt mit der Sortiereinheit 4 verbunden wird, sowie einen optionalen vierten Abschnitt 14f des dritten Warentransportsystems, welcher in den sechsten Abschnitt 7f des Hängefördersystems mündet, wodurch der dritte Lagerbereich 9c direkt mit der Packstation 5 verbunden wird.

Schließlich umfasst das Lager- und Kommissioniersystem 1a eine Rückförderbahn 15 von der Packstation 5 zurück zur Beladestation 3.

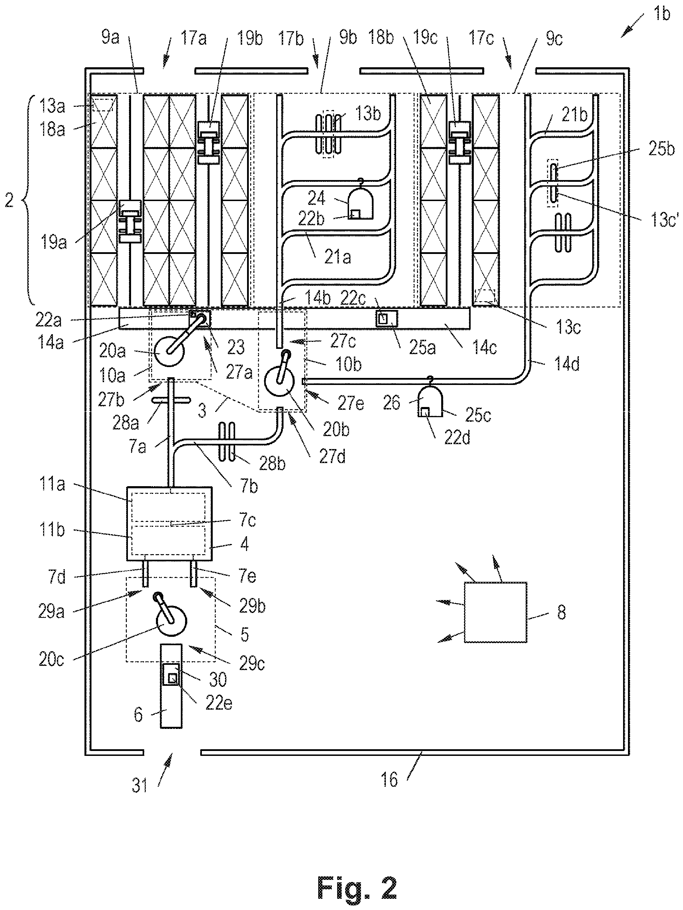

Fig. 2 zeigt eine etwas detailliertere Darstellung eines weiteren beispielhaften Lager- und Kommissioniersystems 1b, das strukturell ähnlich zu dem in der Fig. 1 dargestellten Lager- und Kommissioniersystem 1a ist.

Konkret umfasst das Lager- und Kommissioniersystem 1b wiederum ein Warenlager 2, eine Beladestation 3, eine Sortiereinheit 4, eine Packstation 5, eine Versandeinrichtung 6 und ein Hängefördersystem 7a..7e sowie ein symbolhaft dargestellte Steuerungssystem 8, welche in einem Gebäude 16 untergebracht sind.

Das Warenlager 2 umfasst in diesem Beispiel drei unterschiedliche Lagerbereiche 9a..9c. Die Beladestation 3 weist wiederum eine erste Beladevorrichtung 10a und eine zweite Beladevorrichtung 10b auf. Die Sortiereinheit 4 ist lediglich symbolhaft dargestellt und kann eine Sortierstufe 11a oder mehrere Sortierstufen 11a, 11b umfassen. Die Packstation 5 ist strukturell etwas anders aufgebaut als in der Fig. 1 und weist in diesem Beispiel eingangsseitig zwei Abschnitte 7d, 7e des Hängefördersystems auf und ausgangsseitig eine Versandeinrichtung 6.

Konkret verbindet ein erster Abschnitt 7a des Hängefördersystems die erste Beladevorrichtung 10a mit der Sortiereinheit 4, ein zweiter Abschnitt 7b des Hängefördersystems die zweite Beladevorrichtung 10b mit der Sortiereinheit 4, ein vierter Abschnitt 7d des Hängefördersystems die Sortiereinheit 4 mit der Packstation 5 und ein fünfter Abschnitt 7e des Hängefördersystems ebenfalls die Sortiereinheit 4 mit der Packstation 5.

Das erste Warentransportsystem 14a verbindet wiederum den ersten Lagerbereich 9a mit der ersten Beladevorrichtung 10a der Beladestation 3, das zweite Warentransportsystem 14b verbindet den zweiten Lagerbereich 9b mit der zweiten Beladevorrichtung 10b der Beladestation 3, der erste Abschnitt 14c des dritten Warentransportsystems verbindet den dritten Lagerbereich 9c mit der ersten Beladevorrichtung 10a der Beladestation 3, und der zweite Abschnitt 14d des dritten Warentransportsystems verbindet den dritten Lagerbereich 9c mit der zweiten Beladevorrichtung 10b der Beladestation 3.

Der erste Lagerbereich 9a ist im Bereich eines ersten Warenübernahmebereichs 17a angeordnet, der zweite Lagerbereich 9b im Bereich eines zweiten Warenübernahmebereichs 17b und der dritte Lagerbereich 9c im Bereich eines dritten Warenübernahmebereichs 17c.

Der erste Lagerbereich 9a, umfasst mehrere Lagerregale 18a mit Lagerplätzen 13a, sowie Regalbediengeräte 19a und 19b, die in zwischen den Lagerregalen 18a verlaufenden Regalgassen verfahren. An jenem Ende der Regalgassen, welches dem ersten Warenübernahmebereich 17a gegenüberliegt, ist das erste Warentransportsystem 14a angeordnet, welches zu einem ersten Roboter 20a der ersten Beladevorrichtung 10a führt.

Der dritte Lagerbereich 9c, umfasst ebenfalls mehrere Lagerregale 18b mit Lagerplätzen 13c, sowie ein Regalbediengerät 19c, das in der zwischen den Lagerregalen 18b verlaufenden Regalgasse verfährt. An jenem Ende der Regalgasse, welches dem dritten Warenübernahmebereich 17c gegenüberliegt, ist der erste Abschnitt 14c des dritten Warentransportsystems angeordnet, welcher ebenfalls zum ersten Roboter 20a der ersten Beladevorrichtung 10a führt. In diesem Beispiel sind das erste Warentransportsystem 14a und der erste Abschnitt 14c des dritten Warentransportsystems als gemeinsame Förderbahn ausgebildet. Dies ist aber keine zwingende Bedingung.

Der zweite Lagerbereich 9b, umfasst mehrere Lagerhängebahnen 21a mit Lagerplätzen 13b. An jenem Ende des zweiten Lagerbereichs 9b, welches dem zweiten Warenübernahmebereich 17b gegenüberliegt, ist das zweite Warentransportsystem 14b angeordnet, welches als Transporthängebahn ausgebildet ist und zu einem zweiten Roboter 20b der zweiten Beladevorrichtung 10b führt.

Schließlich umfasst auch der dritte Lagerbereich 9c mehrere Lagerhängebahnen 21b mit Lagerplätzen 13c'. An jenem Ende des dritten Lagerbereichs 9c, welches dem dritten Warenübernahmebereich 17c gegenüberliegt, ist der zweite Abschnitt 14d des dritten Warentransportsystems angeordnet, welcher als Transporthängebahn ausgebildet ist und ebenfalls zum zweiten Roboter 20b der zweiten Beladevorrichtung 10b führt.

Im Bereich der Packstation 5 befindet sich schließlich ein dritter Roboter 20c.

In dem in Fig. 2 dargestellten Beispiel weisen der zweite Lagerbereich 9b und der dritte Lagerbereich 9c Lagerhängebahnen 21a, 21b sowie Transport-Hängebahnen 14b, 14d auf. Dies ist aber keine zwingende Bedingung. Hängewaren können im zweiten Lagerbereich 9b und/oder dritten Lagerbereich 9c auch auf Lager-Hängestangen in einer regalähnlichen Struktur lagern und mit Hilfe eines Regalbediengeräts ein- und ausgelagert werden. Anstelle einer Transportplattform oder zusätzlich dazu weist ein solches Regalbediengerät eine Transport-Hängestange auf. Die Hängewaren können solcherart zwischen einer Lager-Hängestange und einer Transport-Hängestange transferiert werden. In der regalähnlichen Struktur können mehrere Lager-Hängestangen übereinander in verschiedenen Ebenen angeordnet sein. Die besagten Regalbediengeräte können somit Einebenen-Regalbediengeräte oder Mehrebenen-Regalbediengeräte sein. Ein solches Lagersystem ist beispielsweise in der österreichischen Patentschrift AT 516 612 B1 offenbart.

Die Funktion des in der Fig. 1 dargestellten Lager- und Kommissioniersystems 1a beziehungsweise des in der Fig. 2 dargestellten Lager- und Kommissioniersystems 1b ist nun wie folgt:

Waren 22a..22e werden an den Warenübernahmebereichen 17a..17c angeliefert und in die Lagerbereiche 9a..9c eingelagert. Insbesondere werden im ersten Lagerbereich 9a Liegewaren mit ersten Ladehilfsmitteln 23 gelagert, im zweiten Lagerbereich 9b Hängewaren mit zweiten Ladehilfsmitteln 24, und Liegewaren und Hängewaren werden im dritten Lagerbereich 9c mit dritten Ladehilfsmitteln 25a..25c gelagert.

Das erste Ladehilfsmittel 23 kann insbesondere als Behälter, Karton, Tablar oder Palette ausgebildet sein. Im Speziellen umfasst das erste Ladehilfsmittel 23 einen Boden mit einem Aufnahmeplatz auf seiner oberen Seite, auf welchem zumindest eine Ware 22a, bevorzugt eine Vielzahl an Waren 22a abgelegt werden können, und eine Transportfläche auf seiner unteren Seite, durch welche das erste Ladehilfsmittel 23 transportierbar ist, sowie vom Boden aufragende Seitenwände.

Das zweite Ladehilfsmittel 24 kann insbesondere als Kleiderbügel oder Hängetasche für Hängeware ausgebildet sein. An seinem oberen Ende kann der Kleiderbügel oder die Hängetasche einen Haken oder ein Führungsstück aufweisen, mit dessen Hilfe der Kleiderbügel / die Hängetasche in den Lager-Hängebahnen 21a gelagert, beziehungsweise auf dem zweiten Warentransportsystem 14b transportiert werden kann. Ein solche Hängetasche ist beispielsweise in der österreichischen Patentanmeldung A 50320/2018 offenbart.

Die dritten Ladehilfsmittel 25a..25c können insbesondere als Behälter, Karton, Tablar oder Palette ausgebildet und in den Lagerregalen 18b gelagert sein, oder aber auch als Kleiderbügel oder Hängetasche ausgebildet sein und auf den Lager-Hängebahnen 21b gelagert sein. Das zum ersten Ladehilfsmittel 23 und zweiten Ladehilfsmittel 24 Gesagte gilt dabei sinngemäß auch für die dritten Ladehilfsmittel 25a..25c.

Die Waren 22a..22e können generell vereinzelt oder in Anliefer-Warenträgern (nicht dargestellt) angeliefert werden. Im Zuge des Einlagerungsvorgangs können die Waren 22a..22e vereinzelt werden, dies muss aber nicht sein. Auch ist das Umladen in oder auf ein erstes Ladehilfsmittel 23, ein zweites Ladehilfsmittel 24 oder ein drittes Ladehilfsmittel 25a..25c nicht zwingend, sondern es wäre auch denkbar, einen Anliefer-Warenträger direkt im Warenlager 2 einzulagern. Denkbar ist insbesondere, dass Waren 22a..22e, die auf einem Kleiderbügel oder in eine Hängetasche angeliefert werden, auf einem Hängeadapter aufgehängt und in den zweiten Lagerbereich 9b oder den dritten Lagerbereich 9c eingelagert werden.

Im Bereich des Lager- und Kommissioniersystems 1b sind einige Waren 22a..22d symbolhaft in Ladehilfsmitteln 23..25c dargestellt. Konkret ist eine Ware 22a im ersten Ladehilfsmittel 23 dargestellt, eine Ware 22b im zweiten Ladehilfsmittel 24, eine Ware 22c im dritten Ladehilfsmittel 25a und eine Ware 22d im dritten Ladehilfsmittel 25c. Das zweite Ladehilfsmittel 24 und das dritte Ladehilfsmittel 25c sind in diesem Beispiel jeweils als Hängetasche ausgebildet und zwecks besserer Darstellung in die Zeichenebene gedreht. Daher ist in der Fig. 2 auch ein Aufbewahrungsraum 26 (für das dritte Ladehilfsmittel 25c explizit bezeichnet), in dem die Ware 22d lagert, sichtbar. In der Realität hängen die Hängetaschen 24, 25c selbstverständlich nach unten und erscheinen dann so wie die anderen in der Fig. 2 dargestellten Hängetaschen.

Die Regalbediengeräte 19a und 19b können dem ersten Warentransportsystem 14a zugerechnet werden, das heißt Teil desselben sein. Analog kann das Regalbediengerät 19c dem dritten Warentransportsystem 14c, 14d zugerechnet werden, das heißt Teil desselben sein. Demgemäß umfasst das erste Warentransportsystem 14a dann eine Auslagerfördertechnik zum Transport der Waren 22a von den ersten Lagerplätzen 13a zur Beladestation 3 und eine Einlagerfördertechnik zum Transport der Waren 22a von der Beladestation 3 zu den ersten Lagerplätzen 13a. Weiterhin umfasst das dritte Warentransportsystem 14c dann eine Auslagerfördertechnik zum Transport der Waren 22c von den dritten Lagerplätzen 13c zur Beladestation 3 und eine Einlagerfördertechnik zum Transport der Waren 22c von der Beladestation 3 zu den dritten Lagerplätzen 13c. Die Ein- und Auslagerfördertechnik im ersten Lagerbereich 9a wird in diesem Beispiel durch die Regalbediengeräte 19a und 19b gebildet, die Ein- und Auslagerfördertechnik im dritten Lagerbereich 9c durch das Regalbediengerät 19c.

Auch die Transport-Hängebahnen 14b und 14d können sowohl zum Einlagern und Auslagern von Waren 22b, 22d eingesetzt werden. Demgemäß umfasst auch das zweite Warentransportsystem 14b eine Auslagerfördertechnik zum Transport der Waren 22b von den zweiten Lagerplätzen 13b zur Beladestation 3 und eine Einlagerfördertechnik zum Transport der Waren 22b von der Beladestation 3 zu den zweiten Lagerplätzen 13b. Darüber hinaus umfasst das dritte Warentransportsystem 14d eine Auslagerfördertechnik zum Transport der Waren 22d von den dritten Lagerplätzen 13c' zur Beladestation 3 und eine Einlagerfördertechnik zum Transport der Waren 22d von der Beladestation 3 zu den dritten Lagerplätzen 13c'.

Wie aus den Figuren erkennbar ist, ist das Warentransportsystem 14a..14f nicht nur innerhalb eines Lagerbereichs 9a..9c angeordnet, sondern reicht über den eigentlichen Lagerbereich 9a hinaus. Das heißt, dass das erste Warentransportsystem 14a über den ersten Lagerbereich 9a, das zweite Warentransportsystem 14b über den zweiten Lagerbereich 9b und das dritte Warentransportsystem 14c..14f über den dritten Lagerbereich 9c hinausragt.

Ist ein Kommissionierauftrag durch das Steuerungssystem 8 abzuarbeiten, werden die dem Auftrag zugeordneten Waren 22a..22e aus dem Warenlager 2 ausgelagert. Lagern die dem Auftrag zugeordneten Waren 22a im ersten Lagerbereich 9a, werden demzufolge die ersten Ladehilfsmittel 23, welche die betreffenden Waren 22a beinhalten, mithilfe zumindest eines Regalbediengeräts 19a und 19b aus zumindest einem Lagerregal 18a ausgelagert und auf eine Fördereinrichtung des ersten Warentransportsystems 14a übergeben. In Folge werden die dem Auftrag zugeordneten Waren 22a mit dem ersten Ladehilfsmittel 23 zum ersten Roboter 20a transportiert und an der ersten Belade-Andienposition 27a angedient. In Folge werden die dem Auftrag zugeordneten Waren 22a vom ersten Roboter 20a in ein an der zweiten Belade-Andienposition 27b angedientes Transportmittel 28a umgeladen und zur Sortiereinheit 4 gefördert.

Lagern die dem Auftrag zugeordneten Waren 22b im zweiten Lagerbereich 9b, werden die zweiten Ladehilfsmittel 24, auf oder in welchen die betreffenden Waren 22b lagern, mithilfe des zweiten Warentransportsystems 14b zum zweiten Roboter 20b transportiert und an der dritten Belade-Andienposition 27c angedient. In Folge werden die dem Auftrag zugeordneten Waren 22b vom zweiten Roboter 20b in ein an der vierten Belade-Andienposition 27d Transportmittel 28b umgeladen und ebenfalls zur Sortiereinheit 4 gefördert.

Lagern die dem Auftrag zugeordneten Waren 22c, 22d im dritten Lagerbereich 9c, werden die dritten Ladehilfsmittel 25a..25c zur Beladestation 3 gefördert.

Lagern die dem Auftrag zugeordneten Waren 22c im Lagerregal 18b, werden die dritten Ladehilfsmittel 25a, welche die betreffenden Waren 22c beinhalten, mithilfe des Regalbediengeräts 19c aus zumindest einem Lagerregal 18b ausgelagert und auf den ersten Abschnitt 14c des dritten Warentransportsystems übergeben. In Folge werden die dem Auftrag zugeordneten Waren 22c mit dem dritten Ladehilfsmittel 25a zum ersten Roboter 20a transportiert und an der ersten Belade-Andienposition 27a angedient. In Folge werden die dem Auftrag zugeordneten Waren 22c vom ersten Roboter 20a in ein an der zweiten Belade-Andienposition 27b angedientes Transportmittel 28a umgeladen und zur Sortiereinheit 4 gefördert.

Lagern die dem Auftrag zugeordneten Waren 22d in den Lager-Hängebahnen 21b, werden die dritten Ladehilfsmittel 25b, 25c, auf oder in welchen die betreffenden Waren 22d lagern, mithilfe des zweiten Abschnitts 14c des dritten Warentransportsystems zum zweiten Roboter 20b transportiert und an der fünften Belade-Andienposition 27e angedient. In Folge werden die dem Auftrag zugeordneten Waren 22d vom zweiten Roboter 20b in ein an der vierten Belade-Andienposition 27d angedientes Transportmittel 28b umgeladen und ebenfalls zur Sortiereinheit 4 gefördert.

Die Beladestation 3 in Fig. 2 umfasst somit eine erste Beladevorrichtung 10a und eine zweite Beladevorrichtung 10b. Die erste Beladevorrichtung 10a umfasst den ersten Roboter 20a sowie die erste Belade-Andienposition 27a und die zweite Belade-Andienposition 27a. Die zweite Beladevorrichtung 10b umfasst den zweiten Roboter 20b sowie die dritte bis fünfte Belade-Andienposition 27c..27e.

Im Lager- und Kommissioniersystem 1a, 1b werden mehrere Kommissionieraufträge simultan abgearbeitet. Die Auslagerung der im Warenlager 2 bereitgestellten Waren 22a..22e aus dem Warenlager 2 erfolgt zu jedem Kommissionierauftrag individuell und unabhängig von den anderen Kommissionieraufträgen im Wesentlichen "verzögerungsfrei". Das Auslagern umfasst einen Transport einer Ware 22a aus dem Warenlager 2 gemäß einem ersten Kommissionierauftrag zur Beladestation 3 und einen Transport einer Ware 22b aus dem Warenlager 2 gemäß einem zweiten Kommissionierauftrag zur Beladestation 3.

In Folge wird die Ware 22a gemäß dem ersten Kommissionierauftrag und die Ware 22b gemäß dem zweiten Kommissionierauftrag an der Beladestation 3 bereitgestellt. Weiterhin werden Transportmittel 28a, 28b des Hängefördersystems 7a..7f an der Beladestation 3 bereitgestellt. In einem weiteren Schritt wird die Ware 22a zum ersten Kommissionierauftrag in eines der bereitgestellten Transportmittel 28a des Hängefördersystems 7a..7f und die Ware 22b zum zweiten Kommissionierauftrag in eines (ein anderes) der Transportmittel 28b des Hängefördersystems 7a..7f umgeladen. Vorzugsweise wird immer nur je eine Ware 22a, 22b in je ein Transportmittel 28a, 28b geladen.

Danach werden die Transportmittel 28a, 28b über das Hängefördersystem 7a..7f von der Beladestation 3 zu jedem Kommissionierauftrag individuell und unabhängig von den anderen Kommissionieraufträgen direkt, das heißt ohne weitere Zwischenpufferung, im Wesentlichen "verzögerungsfrei" in die Sortiereinheit 4 gefördert. In der Sortiereinheit 4 werden die Transportmittel 28a, 28b nach den Kommissionieraufträgen sortiert. Danach werden die nach den Kommissionieraufträgen gruppierten Transportmittel 28a, 28b von der Sortiereinheit 4 zu der Packstation 5 gefördert.

An der Packstation 5 werden die sortierten Transportmittel 28a, 28b an der ersten Pack-Andienposition 29a und an der zweiten Pack-Andienposition 29b angedient und vom dritten Roboter 20c in ein an der dritten Pack-Andienposition 29c angedientes Versandladehilfsmittel 30 umgeladen. Die Packstation 5 in Fig. 2 umfasst somit den dritten Roboter 20c sowie die erste bis dritte Pack-Andienpositionen 29a..29c.

Schließlich werden die mit den Waren 22e beladenen Versandladehilfsmittel 30 mit Hilfe der Versandeinrichtung 6 zu einem Warenübergabebereich 31 transportiert und dort zum Beispiel in einen Lastkraftwagen verladen und abtransportiert. Ein Versandladehilfsmittel 30 kann beispielsweise nur mit Liegeware oder nur mit Hängeware beladen werden oder mit einer Kombination aus Liege und Hängeware.

Leere oder noch teilweise befüllte Transportmittel 28a, 28b können über die Rückförderbahn 15 von der Packstation 5 zurück zur Beladestation 3 gefördert werden. Denkbar wäre auch, dass leere oder noch teilweise befüllte dritte Ladehilfsmittel 25a..25c von der Packstation 5 zurück in den dritten Lagerbereich 9c gefördert werden (in den Figuren nicht explizit dargestellt).

Gemäß dem vorgeschlagenen Verfahren erfolgt die Auslagerung von Waren 22a..22e aus dem Warenlager 2 zu jedem Kommissionierauftrag individuell und unabhängig von den anderen Kommissionieraufträgen.

Das heißt, ein Transport einer Ware 22a aus dem ersten Lagerbereich 9a zur Beladestation 3 und die Bereitstellung der Ware 22a an der Beladestation 3 gemäß einem ersten Kommissionierauftrag erfolgt individuell und unabhängig vom Transport einer Ware 22b aus dem zweiten Lagerbereich 9b zur Beladestation 3 und der Bereitstellung der Ware 22b an der Beladestation 3 gemäß einem zweiten Kommissionierauftrag und umgekehrt.

Ebenso erfolgt der Transport der Transportmittel 28a, 28b über das Hängefördersystem 7a..7f von der Beladestation 3 zu jedem Kommissionierauftrag individuell und unabhängig von den anderen Kommissionieraufträgen direkt in die Sortiereinheit 4.

Das heißt, ein Transport eines Transportmittels 28a von der Beladestation 3 in die Sortiereinheit 4 gemäß einem ersten Kommissionierauftrag erfolgt individuell und unabhängig vom Transport eines Transportmittels 28b von der Beladestation 3 in die Sortiereinheit 4 gemäß einem zweiten Kommissionierauftrag und umgekehrt.

Der Transport eines Transportmittels 28a, 28b von der Beladestation 3 in die Sortiereinheit 4 erfolgt jeweils direkt, also insbesondere ohne Zwischenspeicherung in einem zwischen der Beladestation 3 und der Sortiereinheit 4 angeordneten Puffer und insbesondere ohne substantielle Haltezeit zwischen der Beladestation 3 und der Sortiereinheit 4.

Existiert auch ein dritter Kommissionierauftrag, so werden auch diese Waren 22c, 22d individuell und unabhängig von den anderen Kommissionieraufträgen ausgelagert. Konkret bedeutet dies, dass ein Transport einer Ware 22c, 22d aus dem dritten Lagerbereich 9c zur Beladestation 3 und die Bereitstellung der Ware 22c, 22d an der Beladestation 3 gemäß dem dritten Kommissionierauftrag individuell und unabhängig vom Transport einer Ware 22a aus dem ersten Lagerbereich 9a zur Beladestation 3 und der Bereitstellung der Ware 22a an der Beladestation 3 gemäß dem ersten Kommissionierauftrag erfolgt und auch individuell und unabhängig vom Transport einer Ware 22b aus dem zweiten Lagerbereich 9b zur Beladestation 3 und der Bereitstellung der Ware 22b an der Beladestation 3 gemäß dem zweiten Kommissionierauftrag.

Der Transport eines Transportmittels 28a, 28b von der Beladestation 3 in die Sortiereinheit 4 zum dritten Kommissionierauftrag erfolgt ebenfalls direkt, also insbesondere ohne Zwischenspeicherung in einem zwischen der Beladestation 3 und der Sortiereinheit 4 angeordneten Puffer und insbesondere ohne substantielle Haltezeit zwischen der Beladestation 3 und der Sortiereinheit 4.

Denkbar wäre auch, dass die Transportmittel 28a, 28b zum dritten Kommissionierauftrag über das Hängefördersystem 7a..7f von der Beladestation 3 unter Umgehung der Sortiereinheit 4, direkt zu der Packstation 5 gefördert werden (siehe das Bypass-Hängefördersystem 7f in der Fig. 1). Ein Sortieren der Waren 22c, 22d entfällt bei dieser Variante, wodurch die Bearbeitungsdauer eines Auftrags beziehungsweise Durchlaufzeit einer Ware 22c, 22d durch das Lager- und Kommissioniersystem 1a, 1b noch weiter verkürzt wird.

Die Beladestation 3 umfasst in dem in den Figuren dargestellten Lager- und Kommissioniersystem 1a, 1b eine erste Beladevorrichtung 10a und eine zweite Beladevorrichtung 10b. Demgemäß werden die Waren 22a vom ersten Lagerbereich 9a zur ersten Beladevorrichtung 10a und die Waren 22b vom zweiten Lagerbereich 9b zur zweiten Beladevorrichtung 10b transportiert. Die Waren 22c, 22d aus dem dritten Lagerbereich 9c werden wahlweise zur ersten Beladevorrichtung 10a oder zur zweiten Beladevorrichtung 10b transportiert. Konkret werden Waren 22c, welche im Lagerregal 18b lagern, zur ersten Beladevorrichtung 10a und Waren 22d, die in den Lagerhängebahnen 21b lagern, zur zweiten Beladevorrichtung 10b transportiert.

Im Hinblick auf die dritten Ladehilfsmittel 25a..25c aus dem dritten Lagerbereich 9c sind weiterhin unterschiedliche Vorgangsweisen denkbar. Beispielsweise kann ein drittes Ladehilfsmittel 25b, 25c durch eine Hängetasche mit einem Hängeträger zum Transport durch das dritte Warentransportsystem 14c.. 14f und einem Aufbewahrungsraum 26 zur Aufnahme der Ware 22d gebildet sein. Auf diese Weise können insbesondere Liegewaren im dritten Ladehilfsmittel 25b, 25c gelagert werden. Denkbar wäre aber auch, dass ein drittes Ladehilfsmittel 25b, 25c durch eine Hängetasche mit einem Hängeträger zum Transport durch das dritte Warentransportsystem 14c..14f und mit einem Aufbewahrungsraum 26 zur Aufnahme der Ware 22d und einem Transporthaken zum Aufhängen der Ware 22d gebildet ist. Auf diese Weise können insbesondere Hängewaren im dritten Ladehilfsmittel 25b, 25c gelagert werden. Schließlich wäre auch möglich, dass ein drittes Ladehilfsmittel 25a..25c durch einen Hängeadapter zum Aufhängen der Ware 22d gebildet ist. Auf diese Weise können Hängewaren auch ohne Zuhilfenahme einer Hängetasche im dritten Lagerbereich 9c gelagert werden.

Wenn die dritten Ladehilfsmittel 25a..25c für den Transport durch das Hängefördersystem 7a..7f ausgebildet sind, können diese unter Umgehung der Beladestation 3 direkt zur Sortiereinheit 4 gefördert werden (siehe den in der Fig. 1 in den zweiten Abschnitt 7b des Hängefördersystems mündenden dritten Abschnitt 14e des dritten Warentransportsystems) oder direkt zur Packstation 5 (siehe den in der Fig. 1 in den sechsten Abschnitt 7f des Hängefördersystems mündenden vierten Abschnitt 14f des dritten Warentransportsystems). Dies ist insbesondere dann möglich, wenn die dritten Ladehilfsmittel 25a..25c als Hängetaschen oder als Hängeadapter ausgebildet sind.

Der zweite Abschnitt 7b des Hängefördersystems und der dritte Abschnitt 14e des dritten Warentransportsystems können mit der gleichen Fördertechnik aufgebaut sein und somit als ein (einziges) Transportsystem aufgefasst werden. Gleichermaßen können der fünfte Abschnitt 7f des Hängefördersystems und der vierte Abschnitt 14f des dritten Warentransportsystems mit der gleichen Fördertechnik aufgebaut sein und somit als ein (einziges) Transportsystem aufgefasst werden. Demgemäß kann der dritte Lagerbereich 9c über das Hängefördersystem oder das Warentransportsystem 14 direkt mit der Sortiereinheit 4 oder der Packstation 5 verbunden sein.

In dem in der Fig. 2 dargestellten Lager- und Kommissioniersystem 1b sind kein dritter und vierter Abschnitt 14e, 14f des dritten Warentransportsystems dargestellt. Nichts desto trotz ist auch dort die Anwendung eines dritten und vierten Abschnitts 14e, 14f des dritten Warentransportsystems uneingeschränkt möglich.

Auch ist in der Fig. 2 keine Rückförderbahn 15 von der Packstation 5 zurück zur Beladestation 3 und auch keine Förderbahn von der Packstation 5 zurück in den dritten Lagerbereich 9c explizit dargestellt. Nichts desto trotz ist auch die Anwendung einer Rückförderbahn 15 von der Packstation 5 zurück zur Beladestation 3 und auch eine Förderbahn von der Packstation 5 zurück in den dritten Lagerbereich 9c in dem in der Fig. 2 dargestellten Lager- und Kommissioniersystem 1b uneingeschränkt möglich.

In der Sortiereinheit 4 werden die Transportmittel 28a, 28b nach den Kommissionieraufträgen sortiert. Die Sortiereinheit 4 kann dazu insbesondere eine erste Sortierstufe 11a und eine dieser nachfolgende zweite Sortierstufe 11b aufweisen, so wie das in den Fig. 1 und 2 dargestellt ist. Die zweite Sortierstufe 11b ist dabei im Speziellen zur Sortierung der Transportmittel 28a, 28b zu einem der ersten und zweiten Kommissionieraufträge nach einer vorgegebenen Reihenfolge ausgebildet.

Vorzugsweise erfolgt das Sortieren der Transportmittel 28a, 28b gemäß einer Reihenfolge der Waren 22a..22e innerhalb des jeweiligen Kommissionierauftrags. Das heißt, die Transportmittel 28a des ersten Kommissionierauftrags kommen dann in einer Reihenfolge sortiert an der Packstation 5 an. Dasselbe gilt für die Transportmittel 28b des zweiten Kommissionierauftrags und die Transportmittel 28a, 28b des dritten Kommissionierauftrags.

Eine erste Sortierstufe 11a, 11b kann eine Sortierbahn oder mehrere Sortierbahnen aufweisen. Insbesondere ist die erste Sortierstufe 11b dazu ausgebildet ist, je Sortierbahn die Transportmittel 28a, 28b eines einzigen ersten Kommissionierauftrags oder einzigen zweiten Kommissionierauftrags zu puffern.

Vor der Auslagerung der Waren 22a..22e kann zudem eine Analyse der im ersten Lagerbereich 9a, im zweiten Lagerbereiche 9b und im dritten Lagerbereich 9c gelagerten Ware 22a..22e und eine Ermittlung der zu einem der Kommissionieraufträge erforderlichen Ware 22a..22e erfolgen. In einer ersten Variante wird die Ware 22c, 22d aus dem dritten Lagerbereich 9c ausgelagert, wenn in der Analyse festgestellt, dass die erforderliche Ware 22a..22e sowohl in einem der ersten und zweiten Lagerbereiche 9a, 9b als auch im dritten Lagerbereich 9c gelagert ist. Das heißt, es wird auf den Lagerbestand an Waren im dritten Lagerbereich 9c zurückgegriffen, wodurch dieser relativ klein ausgebildet sein kann.

Denkbar wäre aber auch, dass die Ware 22a..22e aus einem der ersten und zweiten Lagerbereiche 9a, 9b ausgelagert wird, wenn in der Analyse festgestellt wurde, dass die erforderliche Ware 22a..22e sowohl in einem der ersten und zweiten Lagerbereiche 9a, 9b als auch im dritten Lagerbereich 9c gelagert ist. Das heißt, in diesem Fall wird auf den Lagerbestand an Waren im ersten Lagerbereich 9a und/oder zweiten Lagerbereich 9b zurückgegriffen, wodurch diese relativ klein ausgebildet sein kann / können.

Vorteilhaft sind der erste Lagerbereich 9a und der zweite Lagerbereich 9b als Warenvorratslager und der dritte Lagerbereich 9c als Retourenwarenlager ausgebildet. Der vierte Lagerbereich 9d ist insbesondere als Palettenlager ausgebildet, welcher mit dem ersten Lagerbereich 9a zusammenwirkt. Dies sind aber keine zwingenden Bedingungen für das vorgeschlagene Verfahren und die Lagerbereiche 9a..9d könnten auch eine andere Funktion haben. Auch könnten nur der erste Lagerbereich 9a (insbesondere als Warenvorratslager) und der zweite Lagerbereich 9b (insbesondere als Retourenwarenlager) vorgesehen sein.

Um die Belastung des Hängefördersystems 7a..7f gering zu halten, wird wenigstens eines der Transportmittel 28a, 28b mit mehr als einer Ware 22a..22e eines Kommissionierauftrags beladen. Sofern in einem Ladehilfsmittel 23..25c nach dem Umladen der Ware 22a..22d in ein Transportmittel 28a, 28b noch Ware 22a..22d enthalten ist, wird dieses vorzugsweise zurück in das Warenlager 2 transportiert (siehe die Rückförderbahn 15). Auf diese Weise stehen die verbleibenden Waren 22a..22d für einen nachfolgenden Kommissionierauftrag zur Verfügung.

Vorteilhaft ist es schließlich, wenn das Transportmittel 28a, 28b ein Kennzeichnungsmerkmal aufweist und durch das Steuerungssystem 8 von der Ware 22a..22e ein Kennzeichnungsmerkmal erfasst wird, wobei nach dem Umladen der Ware 22a..22e in das Transportmittel 28a, 28b, von einem Erfassungsmittel das Kennzeichnungsmerkmal des Transportmittels 28a, 28b automatisch erfasst und durch das Steuerungssystem 8 die Ware 22a..22e datentechnisch mit dem zugehörigen Transportmittel 28a, 28b verknüpft wird. Insbesondere ist es dabei von Vorteil, wenn jedes Transportmittel 28a, 28b ein kontaktlos auslesbares Kennzeichnungsmerkmal mit einer eindeutigen Identifikationskennung aufweist, insbesondere ein optisch oder mittels Funk auslesbares Kennzeichnungsmerkmal. Dadurch kann eine Ware 22a..22e leicht innerhalb des Lager- und Kommissioniersystems 1a, 1b lokalisiert werden, und auch der Kommissioniervorgang (konkret das Beladen eines Versandladehilfsmittels 30) kann auf einfache Weise erfolgen. Beispielsweise kann das Kennzeichnungsmerkmal durch Daten gebildet sein, die auf einem RFID-Tag ("Radio Frequency Identification Tag") des Transportmittels 28a, 28b gespeichert sind oder in Form eines eindimensionalen oder zweidimensionalen Barcodes auf dem Transportmittel 28a, 28b angebracht sind.

Das zu den Fig. 1 und 2 beschriebe Verfahren wird vom Steuerungssystem 8 übernommen. Das heißt, dass das Steuerungssystem 8 die angeführten Einrichtungen ansteuert, um das beschriebene Verfahren durchzuführen, so wie das in den Fig. 1 und 2 mit Pfeilen, die vom Steuerungssystem 8 wegweisen, angedeutet ist. Denkbar wäre auch, dass Teile des beschriebenen Verfahrens von anderen, übergeordneten oder untergeordneten Steuerungen übernommen werden. Beispielsweise können Teile des Verfahrens durch Steuerungen der Roboter 19a..19c, des Hängefördersystems 7a..7f oder des Warentransportsystems 14..14f übernommen werden. Das Steuerungssystem 8 kann insbesondere einen Rechner mit einem darauf ablaufenden Programm umfassen und zumindest in Teilen durch eine Speicherprogrammierbare Steuerung gebildet sein.

Abschließend wird festgehalten, dass der Schutzbereich durch die Patentansprüche bestimmt ist. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

## Bezugszeichenaufstellung

| | |
|---|---|
| 1a, 1b | Lager- und Kommissioniersystem |
| 2 | Warenlager |
| 3 | Beladestation |
| 4 | Sortiereinheit |
| 5 | Packstation |

| 6 | Versandeinrichtung |
|---|---|
| 7a..7f | Hängefördersystem |
| 8 | Steuerungssystem |
| 9a..9d | Lagerbereich |
| 10a..10b | Beladevorrichtung |
| 11a..11b | Sortierstufe |
| 12a..12b | Packvorrichtung |
| 13..13c' | Lagerplatz |
| 14..14f | Warentransportsystem |
| 15 | Rückförderbahn |
| 16 | Gebäude |
| 17a..17c | Warenübernahmebereich |
| 18a, 18b | Lagerregal |
| 19a..19c | Regalbediengerät |
| 20a..20c | Roboter |
| 21a, 21b | Lagerhängebahn |
| 22a..22e | Ware |
| 23 | erstes Ladehilfsmittel |
| 24 | zweites Ladehilfsmittel (Kleiderbügel) |
| 25a..25c | drittes Ladehilfsmittel |
| 26 | Aufbewahrungsraum |
| 27a..27e | Belade-Andienposition |
| 28a, 28b | Transportmittel (Hängetasche) |
| 29a..29c | Pack-Andienposition |
| 30 | Versandladehilfsmittel |
| 31 | Warenübergabebereich |

**Patentansprüche**

1. Verfahren zum Kommissionieren von Waren (22a..22e) in einem Lager- und Kommissioniersystem (1a, 1b) mit

    - einem Warenlager (2),
    - einer Beladestation (3),
    - einer Sortiereinheit (4),
    - einer Packstation (5),
    - einem Hängefördersystem (7a..7f) mit Transportmitteln (28a, 28b) zur Aufnahme von Waren (22a..22e) und zum Transport der Waren (22a..22e) in den Transportmitteln (28a, 28b) zwischen der Beladestation (3), der Sortiereinheit (4) und der Packstation (5),
    - und einem Steuerungssystem (8),

umfassend die Schritte:

    - Bereitstellung von Waren (22a..22e) im Warenlager (2), wobei die Waren (22a..22e) Liegewaren und/oder Hängewaren umfassen,
    - Erfassen von Kommissionieraufträgen durch das Steuerungssystem (8),
    - Auslagerung von Waren (22a..22e) aus dem Warenlager (2) zu jedem Kommissionierauftrag individuell und unabhängig von den anderen Kommissionieraufträgen, wobei das Auslagern umfasst

    - einen Transport einer Ware (22a) aus dem Warenlager (2) gemäß einem ersten Kommissionierauftrag zur Beladestation (3), und
    - einen Transport einer Ware (22b) aus dem Warenlager (2) gemäß einem zweiten Kommissionierauftrag zur Beladestation (3),

    - Bereitstellung der Ware (22a) gemäß dem ersten Kommissionierauftrag und der Ware (22b) gemäß dem zweiten Kommissionierauftrag jeweils an der Beladestation (3),
    - Bereitstellung von Transportmitteln (28a, 28b) des Hängefördersystems (7a..7f) an der Beladestation (3),
    - Umladen der Ware (22a) zum ersten Kommissionierauftrag in eines der Transportmittel (28a, 28b) des Hängefördersystems (7a..7f) und der Ware (22b) zum zweiten Kommissionierauftrag in eines der Transportmittel (28a, 28b) des Hängefördersystems (7a..7f),
    - Transport der Transportmittel (28a, 28b) über das Hängefördersystem (7a, 7b) von der Beladestation (3) zu jedem Kommissionierauftrag individuell und unabhängig von den anderen Kommissionieraufträgen direkt in die Sortiereinheit (4),
    - Sortieren der Transportmittel (28a, 28b) in der Sortiereinheit (4) nach den Kommissionieraufträgen und
    - Transport der nach den Kommissionieraufträgen gruppierten Transportmittel (28a, 28b) von der Sortiereinheit (4) zu der Packstation (5).

2. Verfahren nach Anspruch 1, **gekennzeichnet durch** die Schritte

    - Auslagerung von Waren (22a..22e) aus dem Warenlager (2) zu jedem Kommissionierauftrag individuell und unabhängig von den anderen Kommissionieraufträgen, wobei das Auslagern umfasst
    - einen Transport einer Ware (22c, 22d) aus dem Warenlager (2) gemäß einem dritten Kommissionierauftrag zur Beladestation (3),
    - Bereitstellung der Ware (22c, 22d) gemäß dem dritten Kommissionierauftrag an der Beladestation (3),
    - Bereitstellung von einem Transportmittel (28a, 28b) des Hängefördersystems (7a..7f) an der Beladestation (3),
    - Umladen der Ware (22c, 22d) zum dritten Kommissionierauftrag in das Transportmittel (28a, 28b) des Hängefördersystems (7a..7f) und
    - Transport des Transportmittels (28a, 28b) über das Hängefördersystem (7f) von der Beladestation (3) direkt zu der Packstation (5).

**3.** Verfahren nach Anspruch 1 oder 2, **dadurch gekennzeichnet, dass** das Warenlager (2) einen ersten Lagerbereich (9a) mit

- ersten Lagerplätzen (13a) und
- einem automatisiert betriebenen ersten Warentransportsystem (14a) zum Transport der Waren (22a) zwischen den ersten Lagerplätzen (13a) und der Beladestation (3) umfasst,

wobei die Waren (22a) bei der Auslagerung aus dem ersten Lagerbereich (9a) vom ersten Warentransportsystem (14a) von den ersten Lagerplätzen (13a) übernommen und vom ersten Warentransportsystem (14a) zur Beladestation (3) transportiert werden.

**4.** Verfahren nach Anspruch 3, **dadurch gekennzeichnet, dass** die Liegewaren im ersten Lagerbereich (9a) mit ersten Ladehilfsmitteln (23) gelagert werden.

**5.** Verfahren nach einem der Ansprüche 1 bis 4, **dadurch gekennzeichnet, dass** das Warenlager (2) einen zweiten Lagerbereich (9b) mit

- zweiten Lagerplätzen (13b) und
- einem automatisiert betriebenen zweiten Warentransportsystem (14b) zum Transport der Waren (22b) zwischen den zweiten Lagerplätzen (13b) und der Beladestation (3) umfasst,

wobei die Waren (22b) bei der Auslagerung aus dem zweiten Lagerbereich (9b) vom zweiten Warentransportsystem (14b) von den zweiten Lagerplätzen (13b) übernommen und vom zweiten Warentransportsystem (14b) zur Beladestation (3) transportiert werden.

**6.** Verfahren nach Anspruch 5, **dadurch gekennzeichnet, dass** die Hängewaren im zweiten Lagerbereich (9b) mit zweiten Ladehilfsmitteln (24) gelagert werden.

**7.** Verfahren nach einem der Ansprüche 1 bis 6, **dadurch gekennzeichnet, dass** das Warenlager (2) einen dritten Lagerbereich (9c) mit

- dritten Lagerplätzen (13c, 13c') und
- einem dritten Warentransportsystem (14c, 14d) zum Transport der Waren (22c, 22d) zwischen den dritten Lagerplätzen (13c, 13c') und der Beladestation (3) umfasst,

wobei die Waren (22c, 22d) bei der Auslagerung aus dem dritten Lagerbereich (9c) vom dritten Warentransportsystem (14c, 14d) von den dritten Lagerplätzen (13c, 13c') übernommen und vom dritten Warentransportsystem (14c, 14d) zur Beladestation (3) transportiert werden.

**8.** Verfahren nach Anspruch 7, **dadurch gekennzeichnet, dass** die Liegewaren und Hängewaren im dritten Lagerbereich (9c) mit dritten Ladehilfsmitteln (25a..25c) gelagert werden.

**9.** Verfahren nach einem der Ansprüche 3 bis 4 und einem der Ansprüche 5 bis 8, **dadurch gekennzeichnet, dass** die Beladestation (3) eine erste Beladevorrichtung (10a) und eine zweite Beladevorrichtung (10b) umfasst, wobei

- die Waren (22a) bei der Auslagerung aus dem ersten Lagerbereich (9a) vom ersten Warentransportsystem (14a) von den ersten Lagerplätzen (13a) übernommen und vom ersten Warentransportsystem (14a) zur ersten Beladevorrichtung (10a) transportiert werden und
- die Waren (22b) bei der Auslagerung aus dem zweiten Lagerbereich (9b) vom zweiten Warentransportsystem (14b) von den zweiten Lagerplätzen (13b) übernommen und vom zweiten Warentransportsystem (14b) zur zweiten Beladevorrichtung (10b) transportiert werden.

**10.** Verfahren nach einem der Ansprüche 3 bis 9, **dadurch gekennzeichnet, dass** die Beladestation (3) eine erste Beladevorrichtung (10a) und eine zweite Beladevorrichtung (10b) umfasst, wobei die Waren (22c, 22d) bei der Auslagerung aus dem dritten Lagerbereich (9c) vom dritten Warentransportsystem (14c, 14d) von den dritten Lagerplätzen (13c, 13c') übernommen und vom dritten Warentransportsystem (14c, 14d) wahlweise zur ersten Beladevorrichtung (10a) oder zweiten Beladevorrichtung (10b) transportiert werden.

**11.** Verfahren nach einem der Ansprüche 2 bis 10, **dadurch gekennzeichnet, dass** die Hängeware aus einem dritten Lagerbereich (9c) durch das Hängefördersystem (7a..7f) zur Sortiereinheit (4) oder Packstation (5) transportiert wird.

**12.** Verfahren nach einem der Ansprüche 1 bis 11, **dadurch gekennzeichnet, dass** das Warenlager (2) einen dritten Lagerbereich (9c) mit

- dritten Lagerplätzen (13c, 13c') und
- einem dritten Warentransportsystem (14e, 14f) zum Transport der Waren (22c, 22d) zwischen den dritten Lagerplätzen (13c, 13c') und dem Hängefördersystem (7a..7f) umfasst,

wobei

- die Waren (22c, 22d) im dritten Lagerbereich (9c) Hängewaren umfassen, welche mit dem dritten Ladehilfsmittel (25a..25c) gelagert werden und

- die Hängeware bei der Auslagerung aus dem dritten Lagerbereich (9c) vom dritten Warentransportsystem (14e, 14f) von den dritten Lagerplätzen (13c, 13c') übernommen und vom dritten Warentransportsystem (14e, 14f) an das Hängefördersystem (7a..7f) übergeben werden.

13. Verfahren nach einem der Ansprüche 2 bis 12, **dadurch gekennzeichnet, dass** das dritte Ladehilfsmittel (25a..25c) aus dem dritten Lagerbereich (9c) durch

- eine Hängetasche mit einem Hängeträger zum Transport durch das dritte Warentransportsystem (14c..14f) und einem Aufbewahrungsraum (26) zur Aufnahme der Ware (22c, 22d), und/oder
- eine Hängetasche mit einem Hängeträger zum Transport durch das dritte Warentransportsystem (14c..14f) und mit einem Aufbewahrungsraum (26) zur Aufnahme der Ware (22c, 22d) und einem Transporthaken zum Aufhängen der Ware (22c, 22d), und/oder
- einen Hängeadapter zum Aufhängen der Ware (22c, 22d) gebildet ist.

14. Verfahren nach einem der Ansprüche 2 bis 13, **dadurch gekennzeichnet, dass** zumindest einer der ersten und zweiten Lagerbereiche (9a, 9b) ein Warenvorratslager und der dritte Lagerbereich (9c) ein Retourenwarenlager ist.

15. Verfahren nach einem der Ansprüche 2 bis 14, **gekennzeichnet durch** den zusätzlichen Schritt

- Analyse der im Warenlager (2) zumindest in einem der ersten und zweiten Lagerbereiche (9a, 9b) und dem dritten Lagerbereich (9c) gelagerten Ware (22a..22e) durch das Steuerungssystem (8),
- Ermittlung der zu einem der Kommissionieraufträge erforderlichen Ware (22a..22e),
- Auslagerung der Ware (22c, 22d) aus dem dritten Lagerbereich (9c), wenn in der Analyse festgestellt, dass die erforderliche Ware (22a..22e) sowohl in einem der ersten und zweiten Lagerbereiche (9a, 9b) als auch im dritten Lagerbereich (9c) gelagert ist.

16. Verfahren nach einem der Ansprüche 2 bis 14, **gekennzeichnet durch** den zusätzlichen Schritt

- Analyse der im Warenlager (2) zumindest in einem der ersten und zweiten Lagerbereiche (9a, 9b) und dem dritten Lagerbereich (9c) gelagerten Ware (22a..22e) durch das Steuerungssystem (8),
- Ermittlung der zu einem der Kommissionieraufträge erforderlichen Ware (22a..22e),
- Auslagerung der Ware (22a, 22b) aus einem der ersten und zweiten Lagerbereiche (9a, 9b), wenn in der Analyse festgestellt wurde, dass die erforderliche Ware (22a..22e) sowohl in einem der ersten und zweiten Lagerbereiche (9a, 9b) als auch im dritten Lagerbereich (9c) gelagert ist.

17. Verfahren nach einem der Ansprüche 1 bis 16, **dadurch gekennzeichnet, dass** das erste und/oder zweite Ladehilfsmittel (23, 24) nach dem Umladen der Ware (22a..22e) zu einem der ersten und zweiten Kommissionieraufträge zurück in das Warenlager (2) transportiert wird, sofern im ersten und/oder zweiten Ladehilfsmittel (23, 24) noch Ware (22a..22e) enthalten ist.

18. Verfahren nach einem der Ansprüche 1 bis 17, **dadurch gekennzeichnet, dass** das Transportmittel (28a, 28b) ein Kennzeichnungsmerkmal aufweist und durch das Steuerungssystem (8) von der Ware (22a..22e) ein Kennzeichnungsmerkmal erfasst wird, wobei nach dem Umladen der Ware (22a..22e) in das Transportmittel (28a, 28b), von einem Erfassungsmittel das Kennzeichnungsmerkmal des Transportmittels (28a, 28b) automatisch erfasst und durch das Steuerungssystem (8) die Ware (22a..22e) datentechnisch mit dem zugehörigen Transportmittel (28a, 28b) verknüpft wird.

19. Verfahren nach einem der Ansprüche 1 bis 18, **dadurch gekennzeichnet, dass** wenigstens eines der Transportmittel (28a, 28b) mit mehr als einer Ware (22a, 22b) zu einem der ersten und zweiten Kommissionieraufträge beladen wird.

20. Verfahren nach einem der Ansprüche 1 bis 19, **dadurch gekennzeichnet, dass** das Sortieren der Transportmittel (28a, 28b) in der Sortiereinheit (4) das Sortieren der Transportmittel (28a, 28b) gemäß einer Reihenfolge der Waren (22a..22e) innerhalb des jeweiligen Kommissionierauftrags umfasst.

21. Verfahren nach einem der Ansprüche 1 bis 20, **dadurch gekennzeichnet, dass** die Waren (22a..22e) an der Packstation (5) aus den Transportmitteln (28a, 28b) entnommen und in Versandladehilfsmittel (30) umgeladen werden.

22. Verfahren nach einem der Ansprüche 1 bis 21, **dadurch gekennzeichnet, dass** nach dem Umladen der einen oder mehreren Waren (22a..22e) zu einem der ersten, zweiten und dritten Kommissionieraufträge aus dem Transportmittel (28a, 28b) oder den Transportmitteln (28a, 28b) in das zumindest eine Versandladehilfsmittel (30), das zumindest eine Versandladehilfsmittel (30) zu einer Versandeinrichtung (6) transportiert wird.

23. Lager- und Kommissioniersystem (1a, 1b) zum Kommissionieren von Waren, insbesondere zur Durchführung des Verfahrens nach einem der Ansprüche 1 bis 22, umfassend

    - ein Warenlager (2) zur Bereitstellung von Waren (22a..22e), wobei die Waren (22a..22e) Liegewaren und/oder Hängewaren umfassen und wobei das Warenlager (2)

        - Lagerplätze (13) und
        - ein Warentransportsystem (14) zum Transport der Waren (22a..22e) zwischen den Lagerplätzen (13) und der Beladestation (3), umfasst, und

    - eine Beladestation (3) zum Umladen der Waren (22a..22e) in Transportmittel (28a, 28b) gemäß Kommissionieraufträgen,
    - eine Sortiereinheit (4) zum Sortieren der Transportmittel (28a, 28b),
    - eine Packstation (5) zum Umladen der Waren (22a..22e) aus den Transportmitteln (28a, 28b) in Versandladehilfsmittel (30) gemäß Kommissionieraufträgen,
    - ein Hängefördersystem (7a..7f) mit Transportmitteln (28a, 28b) zur Aufnahme von Waren (22a..22e) und zum Transport der Waren (22a..22e) in den Transportmitteln (28a, 28b) zwischen der Beladestation (3), der Sortiereinheit (4) und der Packstation (5),
    - und ein Steuerungssystem (8), welches

        - mit dem Warenlager (2), der Beladestation (3), der Sortiereinheit (4), dem Hängefördersystem (7a..7f) und der Packstation (5) datentechnisch verbunden ist,
        - zum Erfassen von Kommissionieraufträgen ausgebildet ist und
        - zur Ansteuerung des Warentransportsystems (14) für die Auslagerung der Waren (22a..22e) aus dem Warenlager (2) ausgebildet ist, wobei das Auslagern umfasst:

            - einen Transport einer Ware (22a) aus dem Warenlager (2) gemäß einem ersten Kommissionierauftrag zur Beladestation (3), und
            - einen Transport einer Ware (22b) aus dem Warenlager (2) gemäß einem zweiten Kommissionierauftrag zur Beladestation (3),

    **dadurch gekennzeichnet, dass**

das Steuerungssystem (8) ferner dazu ausgebildet ist,

    - das Warentransportsystem (14) für die Auslagerung der Waren (22a..22e) aus dem Warenlager (2) zu jedem Kommissionierauftrag individuell und unabhängig von den anderen Kommissionieraufträgen anzusteuern, und
    - das Hängefördersystem (7a, 7b) für den direkten Transport der Transportmittel (28a, 28b) von der Beladestation (3) in die Sortiereinheit (4) zu jedem Kommissionierauftrag individuell und unabhängig von den anderen Kommissionieraufträgen anzusteuern.

24. Lager- und Kommissioniersystem (1a, 1b) nach Anspruch 23, **dadurch gekennzeichnet, dass**

    - das Warenlager (2) in einem ersten Lagerbereich (9a) erste Lagerplätze (13a) der Lagerplätze (13) und ein automatisiert betriebenes erstes Warentransportsystem (14a) des Warentransportsystems (14) zum Transport der Waren (22a) zwischen den ersten Lagerplätzen (13a) und der Beladestation (3) umfasst und
    - das Steuerungssystem (8) dazu ausgebildet ist, das erste Warentransportsystem (14a) bei der Auslagerung der Waren (22a) aus dem ersten Lagerbereich (9a) zur Übernahme der Waren (22a) von den ersten Lagerplätzen (13a) und zum Transport der Waren (22a) zur Beladestation (3) anzusteuern.

25. Lager- und Kommissioniersystem (1a, 1b) nach Anspruch 23 oder 24, **dadurch gekennzeichnet, dass**

    - das Warenlager (2) in einem zweiten Lagerbereich (9b) zweite Lagerplätze (13b) der Lagerplätze (13) und ein automatisiert betriebenes zweites Warentransportsystem (14b) des Warentransportsystems (14) zum Transport der Waren (22b) zwischen den zweiten Lagerplätzen (13b) und der Beladestation (3) umfasst und
    - das Steuerungssystem (8) dazu ausgebildet ist, das zweite Warentransportsystem (14b) bei der Auslagerung der Waren (22b) aus dem zweiten Lagerbereich (9b) zur Übernahme der Waren (22b) von den zweiten Lagerplätzen (13b) und zum Transport der Waren (22b) zur Beladestation (3) anzusteuern.

26. Lager- und Kommissioniersystem (1a, 1b) nach einem der Ansprüche 23 bis 25, **dadurch gekennzeichnet, dass** das Warenlager (2) in einem dritten Lagerbereich (9c) dritte Lagerplätze (13c, 13c') der Lagerplätze (13) und ein drittes Warentransportsystem (14c, 14d) des Warentransportsystems (14) zum Transport der Waren (22c, 22d) zwischen den dritten Lagerplätzen (13c, 13c') und der Beladestation (3) umfasst und

- das Steuerungssystem (8) dazu ausgebildet ist, das dritte Warentransportsystem (14c, 14d) bei der Auslagerung der Waren (22c, 22d) aus dem dritten Lagerbereich (9c) zur Übernahme der Waren (22c, 22d) von den dritten Lagerplätzen (13c, 13c') und zum Transport der Waren (22c, 22d) zur Beladestation (3) anzusteuern.

27. Lager- und Kommissioniersystem (1a, 1b) nach einem der Ansprüche 23 bis 26, **dadurch gekennzeichnet, dass** das Steuerungssystem (8) dazu ausgebildet ist, das Hängefördersystem (7a..7f) für den Transport der Hängeware aus einem dritten Lagerbereich (9c) zur Sortiereinheit (4) oder zur Packeinheit (5) anzusteuern.

28. Lager- und Kommissioniersystem (1a, 1b) nach einem der Ansprüche 23 bis 27, **dadurch gekennzeichnet, dass**

- das Warenlager (2) in einem dritten Lagerbereich (9c) dritte Lagerplätze (13c, 13c') der Lagerplätze (13) und ein drittes Warentransportsystem (14e, 14f) des Warentransportsystems (14) zum Transport der Waren (22c, 22d) zwischen den dritten Lagerplätzen (13c, 13c') und dem Hängefördersystem (7a..7f) umfasst,
- die Waren (22c, 22d) im dritten Lagerbereich (9c) Hängewaren umfassen, welche mit einem dritten Ladehilfsmittel (25) gelagert werden, und
- das Steuerungssystem (8) dazu ausgebildet ist, das dritte Warentransportsystem (14e, 14f) bei der Auslagerung der Waren (22c, 22d) aus dem dritten Lagerbereich (9c) zur Übernahme der Waren (22c, 22d) von den dritten Lagerplätzen (13c, 13c') und zur Übergabe der Waren (22c, 22d) an das Hängefördersystem (7a..7f) anzusteuern.

29. Lager- und Kommissioniersystem (1a, 1b) nach einem der Ansprüche 26 bis 28, **dadurch gekennzeichnet, dass** das dritte Ladehilfsmittel (25a..25c) aus dem dritten Lagerbereich (9c) durch

- eine Hängetasche mit einem Hängeträger zum Transport durch das dritte Warentransportsystem (14c..14f) und einem Aufbewahrungsraum (26) zur Aufnahme der Ware (22c, 22d) umfasst, und/oder
- eine Hängetasche mit einem Hängeträger zum Transport durch das dritte Warentransportsystem (14c..14f) und mit einem Aufbewahrungsraum (26) zur Aufnahme der Ware (22c, 22d) und einem Transporthaken zum Aufhängen der Ware (22c, 22d) umfasst, und/oder

- einen Hängeadapter zum Aufhängen der Ware (22c, 22d) gebildet ist.

30. Lager- und Kommissioniersystem (1a, 1b) nach einem der Ansprüche 23 bis 29, **dadurch gekennzeichnet, dass** die Beladestation (3) eine erste Beladevorrichtung (10a) und eine zweite Beladevorrichtung (10b) umfasst, wobei das Steuerungssystem (8) dazu ausgebildet ist,

- das erste Warentransportsystem (14a) bei der Auslagerung der Waren (22a) aus dem ersten Lagerbereich (9a) zur Übernahme der Waren (22a) von den ersten Lagerplätzen (13a) und zum Transport der Waren (22a) zur ersten Beladevorrichtung (10a) anzusteuern und
- das zweite Warentransportsystem (14b) bei der Auslagerung der Waren (22b) aus dem zweiten Lagerbereich (9b) zur Übernahme der Waren (22b) von den zweiten Lagerplätzen (13b) und zum Transport der Waren (22b) zur zweiten Beladevorrichtung (10b) anzusteuern.

31. Lager- und Kommissioniersystem (1a, 1b) nach einem der Ansprüche 23 bis 29, **dadurch gekennzeichnet, dass** die Beladestation (3) eine erste Beladevorrichtung (10a) und eine zweite Beladevorrichtung (10b) umfasst, wobei das Steuerungssystem (8) dazu ausgebildet ist, das dritte Warentransportsystem (14c, 14d) bei der Auslagerung der Waren (22c, 22d) aus dem dritten Lagerbereich (9c) zur Übernahme der Waren (22c, 22d) von den dritten Lagerplätzen (13c, 13c') und zum wahlweisen Transport der Waren (22c, 22d) zur ersten Beladevorrichtung (10a) oder zur zweiten Beladevorrichtung (10b) anzusteuern.

32. Lager- und Kommissioniersystem (1a, 1b) nach einem der Ansprüche 23 bis 31, **dadurch gekennzeichnet, dass** zumindest einer der ersten und zweiten Lagerbereiche (9a, 9b) als Warenvorratslager und der dritte Lagerbereich (9c) als Retourenwarenlager (2) ausgebildet ist.

33. Lager- und Kommissioniersystem (1a, 1b) nach einem der Ansprüche 23 bis 32, **dadurch gekennzeichnet, dass** das erste Warentransportsystem (14a) durch eine Auslagerfördertechnik zum Transport der Waren (22a) von den ersten Lagerplätzen (13a) zur Beladestation (3) und eine Einlagerfördertechnik zum Transport der Waren (22a) von der Beladestation (3) zu den ersten Lagerplätzen (13a) gebildet ist.

34. Lager- und Kommissioniersystem (1a, 1b) nach einem der Ansprüche 23 bis 33, **dadurch gekennzeichnet, dass** das zweite Warentransportsystem (14b) durch eine Auslagerfördertechnik zum Transport der Waren (22b) von den zweiten Lagerplätzen (13b) zur Beladestation (3) und eine Einlagerfördertechnik zum Transport der Waren (22b) von der Beladestation (3) zu den zweiten Lagerplätzen (13b) gebildet ist.

35. Lager- und Kommissioniersystem (1a, 1b) nach einem der Ansprüche 23 bis 34, **dadurch gekennzeichnet, dass** jedes Transportmittel (28a, 28b) ein kontaktlos auslesbares Kennzeichnungsmerkmal mit einer eindeutigen Identifikationskennung aufweist, insbesondere ein optisch oder mittels Funk auslesbares Kennzeichnungsmerkmal.

36. Lager- und Kommissioniersystem (1a, 1b) nach einem der Ansprüche 23 bis 35, **dadurch gekennzeichnet, dass** die Sortiereinheit (4) eine erste Sortierstufe (11a) aufweist und die erste Sortierstufe (11a) eine oder mehrere Sortierbahnen aufweist, wobei die erste Sortierstufe (11a) dazu ausgebildet ist, je Sortierbahn die Transportmittel (28a, 28b) eines einzigen ersten Kommissionierauftrags oder einzigen zweiten Kommissionierauftrags zu puffern.

37. Lager- und Kommissioniersystem (1a, 1b) nach Anspruch 23 oder 36, **dadurch gekennzeichnet, dass** die Sortiereinheit (4) eine erste Sortierstufe (11a) und wenigstens eine dieser nachfolgende zweite Sortierstufe (11b) aufweist, wobei die zweite Sortierstufe (11b) zur Sortierung der Transportmittel (28a, 28b) zu einem der ersten und zweiten Kommissionieraufträge nach einer vorgegebenen Reihenfolge ausgebildet ist.

**Claims**

1. A method for picking articles (22a..22e) in a storage and picking system (1a, 1b) with

   - an article storage (2),
   - a loading station (3),
   - a sorting unit (4),
   - a packing station (5),
   - an overhead conveyor system (7a..7f) with transport means (28a, 28b) for receiving articles (22a..22e) and for transporting the articles (22a..22e) in the transport means (28a, 28b) between the loading station (3), the sorting unit (4) and the packing station (5),
   - and a control system (8),

   comprising the steps:

   - providing articles (22a..22e) in the article storage (2), wherein the articles (22a..22e) comprise flat packed articles and/or hanging articles,
   - acquiring picking orders by means of the control system (8),
   - retrieving articles (22a..22e) from the article storage (2) individually and independently of other picking orders for each picking order, wherein retrieving comprises

      - transporting an article (22a) from the article storage (2) according to a first picking order to the loading station (3), and
      - transporting an article (22b) from the article storage (2) according to a second picking order to the loading station (3),

   - providing the article (22a) according to the first picking order and the article (22b) according to the second picking order in each case at the loading station (3),
   - providing transport means (28a, 28b) of the overhead conveyor system (7a..7f) at the loading station (3),
   - transferring the article (22a) for the first picking order into one of the transport means (28a, 28b) of the overhead conveyor system (7a..7f) and the article (22b) for the second picking order into one of the transport means (28a, 28b) of the overhead conveyor system (7a..7f),
   - for each picking order, transporting the transport means (28a, 28b) from the loading station (3) directly into the sorting unit (4) via the overhead conveyor system (7a, 7b) individually and independently of the other picking orders, and
   - sorting the transport means (28a, 28b) in the sorting unit (4) according to the picking orders, and
   - transporting the transport means (28a, 28b) grouped according to the picking orders from the sorting unit (4) to the packing station (5).

2. The method according to claim 1, **characterized by** the steps

   - retrieving articles (22a..22e) from the article storage (2) individually and independently of other picking orders for each picking order, wherein retrieving comprises
   - transporting an article (22c, 22d) from the article storage (2) according to a third picking order to the loading station (3),
   - providing the article (22c, 22d) according to the third picking order at the loading station (3),
   - providing a transport means (28a, 28b) of the overhead conveyor system (7a..7f) at the loading station (3),
   - transferring the article (22c, 22d) for the third picking order into the transport means (28a, 28b) of the overhead conveyor system (7a..7f), and
   - transporting the transport means (28a, 28b) via the overhead conveyor system (7f) from the loading station (3) directly to the packing station (5).

3. The method according to claim 1 or 2, **characterized in that** the article storage (2) comprises a first storage area (9a) with

   - first storage places (13a) and
   - a first article transport system (14a) operated in an automated manner for transporting the articles (22a) between the first storage places (13a) and the loading station (3), wherein the articles (22a), when retrieved from the first storage area (9a), are picked up from the first storage places (13a) by the first article transport system (14a) and are transported by the first article transport system (14a) to the loading station (3).

4. The method according to claim 3, **characterized in that** the flat packed articles are stored in the first storage area (9a) with first loading aids (23).

5. The method according to one of claims 1 to 4, **characterized in that** the article storage (2) comprises a second storage area (9b) with

   - second storage places (13b) and
   - a second article transport system (14b) operated in an automated manner for transporting the articles (22b) between the second storage places (13b) and the loading station (3),

   wherein the articles (22b), when retrieved from the second storage area (9b), are picked up from the second storage places (13b) by the second article transport system (14b) and are transported by the second article transport system (14b) to the loading station (3).

6. The method according to claim 5, **characterized in that** the hanging articles in the second storage area (9b) are stored with second loading aids (24).

7. The method according to one of claims 1 to 6, **characterized in that** the article storage (2) comprises a third storage area (9c) with

   - third storage places (13c, 13c') and
   - a third article transport system (14c, 14d) for transporting the articles (22c, 22d) between the third storage places (13c, 13c') and the loading station (3),

   wherein the articles (22c, 22d), when retrieved from the third storage area (9c), are picked up from the third storage places (13c, 13c') by the third article transport system (14c, 14d) and are transported from the third second article transport system (14c, 14d) to the loading station (3).

8. The method according to claim 7, **characterized in that** the flat packed articles and hanging articles in the third storage area (9c) are stored with third loading aids (25a..25c).

9. The method according to one of claims 3 to 4 and one of claims 5 to 8, **characterized in that** the loading station (3) comprises a first loading device (10a) and a second loading device (10b), wherein

   - the articles (22a), when retrieved from the first storage area (9a), are picked up from the first storage places (13a) by the first article transport system (14a) and are transported by the first article transport system (14a) to the first loading device (10a), and
   - the articles (22b), when retrieved from the second storage area (9b), are picked up from the second storage places (13b) by the second article transport system (14b) and are transported from the second article transport system (14b) to the second loading device (10b).

10. The method according to one of claims 3 to 9, **characterized in that** the loading station (3) comprises a first loading device (10a) and a second loading device (10b), wherein the articles (22c, 22d), when retrieved from the third storage area (9c), are picked up from the third storage places (13c, 13c') by the third article transport system (14c, 14d) and are transported by the third article transport system (14c, 14d) either to the first loading device (10a) or to the second loading device (10b).

11. The method according to one of claims 2 to 10, **characterized in that** the hanging article is transported by the overhead conveyor system (7a..7f) from a third storage area (9c) to the sorting unit (4) or packing station (5).

12. The method according to one of claims 1 to 11, **characterized in that** the article storage (2) comprises a third storage area (9c) with

   - third storage places (13c, 13c') and
   - a third article transport system (14e, 14f) for transporting the articles (22c, 22d) between the third storage places (13c, 13c') and the overhead conveyor system (7a..7f), wherein
   - the articles (22c, 22d) in the third storage area (9c) comprise hanging articles, which are stored with the third loading aid (25a..25c), and
   - the hanging articles, when retrieved from the third storage area (9c), are picked up from the third storage places (13c, 13c') by the third article transport system (14e, 14f) and are transferred by the third article transport system (14e, 14f) to the overhead conveyor system (7a..7f).

13. The method according to one of claims 2 to 12, **characterized in that** the third loading aid (25a..25c) of the third storage area (9c) is formed by

- a hanging bag with a suspended support for the transport by the third article transport system (14c..14f) and a storage space (26) for accommodating the article (22c, 22d), and/or
- a hanging bag with a suspended support for the transport by the third article transport system (14c..14f) and with a storage space (26) for accommodating the article (22c, 22d) and a transport hook for suspending the article (22c, 22d), and/or
- a suspension adapter for suspending the article (22c, 22d).

14. The method according to one of claims 2 to 13, **characterized in that** at least one of the first and second storage areas (9a, 9b) is an article supply storage, and the third storage area (9c) is a return article storage.

15. The method according to one of claims 2 to 14, **characterized by** the additional step

- analysis of the article (22a..22e) stored in the article storage (2) at least in one of the first and second storage areas (9a, 9b) and the third storage area (9c) by means of the control system (8),
- determining the article (22a..22e) required for one of the picking orders,
- retrieving articles (22c, 22d) from the third storage area (9c), if it was determined in the analysis that the required article (22a..22e) is stored both in one of the first and second storage areas (9a, 9b) and in the third storage area (9c).

16. The method according to one of claims 2 to 14, **characterized by** the additional step

- analysis of the article (22a..22e) stored in the article storage (2) at least in one of the first and second storage areas (9a, 9b) and the third storage area (9c) by means of the control system (8),
- determining the article (22a..22e) required for one of the picking orders,
- retrieving articles (22a, 22b) from one of the first and second storage areas (9a, 9c), if it was determined in the analysis that the required article (22a..22e) is stored both in one of the first and second storage areas (9a, 9b) and in the third storage area (9c).

17. The method according to one of claims 1 to 16, **char-**

**acterized in that** the first and/or second loading aid (23, 24) is transported back into the article storage (2) after transferring the article (22a..22e) for one of the first and second picking orders, if the first and/or second loading aid (23, 24) still contains article (22a..22e).

18. The method according to one of claims 1 to 17, **characterized in that** the transport means (28a, 28b) has a characterizing feature and a characterizing feature of the article (22a..22e) is detected by the control system (8), wherein after transferring the article (22a..22e) into the transport means (28a, 28b), a detection means automatically detects the characterizing feature of the transport means (28a, 28b) and the article (22a..22e) is data-technically linked to the associated transport means (28a, 28b) by the control system (8).

19. The method according to one of claims 1 to 18, **characterized in that** at least one of the transport means (28a, 28b) is loaded with more than one article (22a, 22b) for one of the first and second picking orders.

20. The method according to one of claims 1 to 19, **characterized in that** sorting the transport means (28a, 28b) in the sorting unit (4) comprises sorting the transport means (28a, 28b) according to a sequence of the articles (22a..22e) within the respective picking order.

21. The method according to one of claims 1 to 20, **characterized in that** the articles (22a..22e) are removed from the transport means (28a, 28b) and transferred into dispatch loading aids (30) at the packing station (5).

22. The method according to one of claims 1 to 21, **characterized in that** after transferring the one or multiple articles (22a..22e) for one of the first, second and third picking orders from the one or multiple transport means (28a, 28b) into the at least one dispatch loading aid (30), the at least one dispatch loading aid (30) is transported to a dispatch facility (6).

23. A storage and picking system (1a, 1b) for picking articles, in particular for performing the method according to one of claims 1 to 22, comprising

- an article storage (2) for providing articles (22a..22e), wherein the articles (22a..22e) comprise flat packed articles and/or hanging articles, and wherein the article storage (2) comprises

- storage places (13) and
- an article transport system (14) for transporting the articles (22a..22e) between the storage places (13) and the loading station (3), and

- a loading station (3) for transferring the articles (22a..22e) into transport means (28a, 28b) according to picking orders,
- a sorting unit (4) for sorting the transport means (28a, 28b),
- a packing station (5) for transferring the articles (22a..22e) from the transport means (28a, 28b) into dispatch loading aids (30) according to picking orders,
- an overhead conveyor system (7a..7f) with transport means (28a, 28b) for receiving articles (22a..22e) and for transporting the articles (22a..22e) in the transport means (28a, 28b) between the loading station (3), the sorting unit (4) and the packing station (5),
- and a control system (8), which is

  - data-technically connected to the article storage (2), the loading station (3), the sorting unit (4), the overhead conveyor system (7a..7f) and the packing station (5),
  - configured to acquire picking orders, and
  - configured to control the article transport system (14) for retrieving the articles (22a..22e) from the article storage (2), wherein retrieving comprises:
  - transporting an article (22a) from the article storage (2) according to a first picking order to the loading station (3), and
  - transporting an article (22b) from the article storage (2) according to a second picking order to the loading station (3),

**characterized in that**
the control system (8) is further configured to

  - control the article transport system (14) for retrieving the articles (22a..22e) from the article storage (2) individually and independently of other picking orders for each picking order, and
  - control the overhead conveyor system (7a, 7b) for directly transporting the transport means (28a, 28b) from the loading station (3) into the sorting unit (4) individually and independently of other picking orders for each picking order.

24. The storage and picking system (1a, 1b) according to claim 23, **characterized in that**

  - in a first storage area (9a), the article storage (2) comprises first storage places (13a) of the storage places (13) and a first article transport system (14a) of the article transport system (14), operated in an automated manner for transporting the articles (22a) between the first storage places (13a) and the loading station (3), and

- the control system (8) is configured to control the first article transport system (14a), during the retrieval of the articles (22a) from the first storage area (9a), to pick up the articles (22a) from the first storage places (13a) and to transport the articles (22a) to the loading station (3).

25. The storage and picking system (1a, 1b) according to claim 23 or 24, **characterized in that**

  - in a second storage area (9b), the article storage (2) comprises second storage places (13b) of the storage places (13) and a second article transport system (14b) of the article transport system (14), operated in an automated manner for transporting the articles (22b) between the second storage places (13b) and the loading station (3), and
  - the control system (8) is configured to control the second article transport system (14b), during the retrieval of the articles (22b) from the second storage area (9b), pick up the articles (22b) from the second storage places (13b) and to transport the articles (22b) to the loading station (3).

26. The storage and picking system (1a, 1b) according to one of claims 23 to 25, **characterized in that**, in a third storage area (9c), the article storage (2) comprises third storage places (13c, 13c') of the storage places (13) and a third article transport system (14c, 14d) of the article transport system (14) for transporting the articles (22c, 22d) between the third storage places (13c, 13c') and the loading station (3), and

  - the control system (8) is configured to control the third article transport system (14c, 14d), during the retrieval of the articles (22c, 22d) from the third storage area (9c), to pick up the articles (22c, 22d) from the third storage places (13c, 13c') and to transport the articles (22c, 22d) to the loading station (3).

27. The storage and picking system (1a, 1b) according to one of claims 23 to 26, **characterized in that** the control system (8) is configured to control the overhead conveyor system (7a..7f) to transport the hanging article from a third storage area (9c) to the sorting unit (4) or to the packaging unit (5).

28. The storage and picking system (1a, 1b) according to one of claims 23 to 27, **characterized in that**

  - in a third storage area (9c), the article storage (2) comprises third storage places (13c, 13c') of the storage places (13) and a third article transport system (14e, 14f) of the article transport system (14) for transporting the articles (22c, 22d) between the third storage places (13c, 13c') and the overhead conveyor system (7a..7f), and
- the articles (22c, 22d) in the third storage area (9c) comprise hanging articles, which are stored with a third loading aid (25), and
- the control system (8) is configured to control the third article transport system (14e, 14f), during the retrieval of the articles (22c, 22d) from the third storage area (9c), to pick up the articles (22c, 22d) from the third storage places (13c, 13c') and to transfer the articles (22c, 22d) to the overhead conveyor system (7a..7f).

29. The storage and picking system (1a, 1b) according to one of claims 26 to 28, **characterized in that** the third loading aid (25a..25c) of the third storage area (9c)

- comprises a hanging bag with a suspended support for the transport by the third article transport system (14c..14f) and a storage space (26) for accommodating the article (22c, 22d), and/or
- comprises a hanging bag with a suspended support for the transport by the third article transport system (14c..14f) and with a storage space (26) for accommodating the article (22c, 22d) and a transport hook for suspending the article (22c, 22d), and/or
- formed by a suspension adapter for suspending the article (22c, 22d).

30. The storage and picking system (1a, 1b) according to one of claims 23 to 29, **characterized in that** the loading station (3) comprises a first loading device (10a) and a second loading device (10b), wherein the control system (8) is configured to

- control the first article transport system (14a), during the retrieval of the articles (22a) from the first storage area (9a), to pick up the articles (22a) from the first storage places (13a) and to transport the articles (22a) to the first loading device (10a), and
- control the second article transport system (14b), during the retrieval of the articles (22b) from the second storage area (9b), to pick up the articles (22b) from the second storage places (13b) and to transport the articles (22b) to the second loading device (10b).

31. The storage and picking system (1a, 1b) according to one of claims 23 to 29, **characterized in that** the loading station (3) comprises a first loading device (10a) and a second loading device (10b), wherein the control system (8) is configured to control the third article transport system (14c, 14d), during the retrieval of the articles (22c, 22d) from the third storage area (9c), to pick up the articles (22c, 22d) from the third storage places (13c, 13c') and to optionally transport the articles (22c, 22d) to the first loading device (10a) or to the second loading device (10b).

32. The storage and picking system (1a, 1b) according to one of claims 23 to 31, **characterized in that** at least one of the first and second storage areas (9a, 9b) is configured as an article supply storage, and the third storage area (9c) as a return article storage (2).

33. The storage and picking system (1a, 1b) according to one of claims 23 to 32, **characterized in that** the first article transport system (14a) is formed by a retrieval conveyor system to transport the articles (22a) from the first storage places (13a) to the loading station (3) and a storage conveyor system to transport the articles (22a ) from the loading station (3) to the first storage places (13a).

34. The storage and picking system (1a, 1b) according to one of claims 23 to 33, **characterized in that** the second article transport system (14b) is formed by a retrieval conveyor system to transport the articles (22b) from the second storage places (13b) to the loading station (3) and a storage conveyor system to transport the articles (22b) from the loading station (3) to the second storage places (13b).

35. The storage and picking system (1a, 1b) according to one of claims 23 to 34, **characterized in that** each transport means (28a, 28b) has a characterizing feature, which is readable in a contactless manner, with an unambiguous identifying information, in particular a characterizing feature which is readable optically or by radio.

36. The storage and picking system (1a, 1b) according to one of claims 23 to 35, **characterized in that** the sorting unit (4) has a first sorting stage (11a) and the first sorting stage (11a) has one or multiple sorting lanes, wherein the first sorting stage (11a) is designed to buffer the transport means (28a, 28b) of a single first picking order or single second picking order per sorting lane.

37. The storage and picking system (1a, 1b) according to claim 23 or 36, **characterized in that** the sorting unit (4) has a first sorting stage (11a) and at least one subsequent second sorting stage (11b), wherein the second sorting stage (11b) is designed for sorting the transport means (28a, 28b) for one of the first and second picking orders according to a predefined sequence.

**Revendications**

1. Procédé de préparation de commandes de marchandises (22a..22e) dans un système de stockage et de préparation de commandes (1a, 1b) avec

   - un entrepôt (2),
   - une station de chargement (3),
   - une unité de tri (4),
   - une station d'emballage (5),
   - un système de convoyage suspendu (7a..7f) avec des moyens de transport (28a, 28b) pour la prise en charge de marchandises (22a..22e) et pour le transport des marchandises (22a..22e) dans les moyens de transport (28a, 28b) entre la station de chargement (3), l'unité de tri (4) et la station d'emballage (5),
   - et un système de commande (8),

   comprenant les étapes suivantes :

   - mise à disposition de marchandises (22a..22e) dans l'entrepôt (2), dans lequel les marchandises (22a..22e) comprennent des marchandises posées et/ou des marchandises suspendues,
   - saisie d'ordre de préparation de commandes par le système de commande (8),
   - déstockage des marchandises (22a..22e) hors de l'entrepôt (2) pour chaque ordre de préparation de commande de manière individuelle et indépendante des autres ordres de préparation de commandes, dans lequel le déstockage comprend
   - un transport d'une marchandise (22a) hors de l'entrepôt (2) conformément à un premier ordre de préparation de commande vers la station de chargement (3), et
   - un transport d'une marchandise (22b) hors de l'entrepôt (2) conformément à un deuxième ordre de préparation de commande vers la station de chargement (3),
   - préparation de la marchandise (22a) conformément au premier ordre de préparation de commande et de la marchandise (22b) conformément au deuxième ordre de préparation de commande respectivement au niveau de la station de chargement (3),
   - préparation des moyens de transport (28a, 28b) du système de convoyage suspendu (7a..7f) au niveau de la station de chargement (3),
   - transfert de la marchandise (22a) concernant le premier ordre de préparation de commande vers un des moyens de transport (28a, 28b) du système de convoyage suspendu (7a..7f) et de la marchandise (22b) concernant le deuxième ordre de préparation de commande vers un des moyens de transport (28a, 28b) du système de convoyage suspendu (7a..7f),
   - transport des moyens de transport (28a, 28b) par l'intermédiaire du système de convoyage suspendu (7a, 7b) de la station de chargement (3) concernant chaque ordre de préparation de commande de manière individuelle et indépendante des autres ordres de préparation de commande directement vers l'unité de tri (4),
   - tri des moyens de transport (28a, 28b) dans l'unité de tri (4) selon les ordres de préparation de commandes et
   - transport des moyens de transport (28a, 28b), groupés selon les ordres de préparation de commandes, de l'unité de tri (4) vers la station d'emballage (5).

2. Procédé selon la revendication 1, **caractérisé par** les étapes suivantes :

   - déstockage des marchandises (22a..22e) hors de l'entrepôt (2) correspondant à chaque ordre de préparation de commande de manière individuelle et indépendante des autres ordres de préparation de commandes, dans lequel le déstockage comprend :

     - un transport d'une marchandise (22c, 22d) hors de l'entrepôt (2) conformément à un troisième ordre de préparation de commande vers la station de chargement (3),
     - préparation de la marchandise (22c, 22d) conformément au troisième ordre de préparation de commande au niveau de la station de chargement (3),
     - préparation d'un moyen de transport (28a, 28b) du système de convoyage suspendu (7a..7f) au niveau de la station de chargement (3),
     - transfert de la marchandise (22c, 22d) correspondant au troisième ordre de préparation vers le moyen de transport (28a, 28b) du système de convoyage suspendu (7a..7f) et
     - transport du moyen de transport (28a, 28b) par l'intermédiaire du système de convoyage suspendu (7f) de la station de chargement (3) directement vers la station d'emballage (5).

3. Procédé selon la revendication 1 ou 2, **caractérisé en ce que** l'entrepôt (2) comprend une première zone de stockage (9a) avec

   - des premiers emplacements de stockage (13a) et
   - un premier système de transport de marchandises (14a) fonctionnant de manière automatisée pour le transport des marchandises (22a) entre les premiers emplacements de stockage (13a) et la station de chargement (3),

dans lequel les marchandises (22a) sont prises en charge, lors du déstockage hors de la première zone de stockage (9a), par le premier système de transport de marchandises (14a), à partir des premiers emplacements de stockage (13a) et sont transportées par le premier système de transport de marchandises (14a) vers la station de chargement (3).

4.  Procédé selon la revendication 3, **caractérisé en ce que** les marchandises posées sont stockées dans la première zone de stockage (9a) avec des premiers moyens de chargement (23).

5.  Procédé selon l'une des revendications 1 à 4, **caractérisé en ce que** l'entrepôt (2) comprend une deuxième zone de stockage (9b) avec

    - des deuxièmes emplacements de stockage (13b) et
    - un deuxième système de transport de marchandises (14b) fonctionnant de manière automatisée pour le transport des marchandises (22b) entre les deuxièmes emplacements de stockage (13b) et la station de chargement (3),

    dans lequel les marchandises (22b) sont prises en charge, lors du déstockage hors de la deuxième zone de stockage (9b), par le deuxième système de transport de marchandises (14b), à partir des deuxièmes emplacements de stockage (13b) et sont transportées par le deuxième système de transport de marchandises (14b) vers la station de chargement (3).

6.  Procédé selon la revendication 5, **caractérisé en ce que** les marchandises suspendues sont stockées dans la deuxième zone de stockage (9b) avec des deuxièmes moyens de chargement (24).

7.  Procédé selon l'une des revendications 1 à 6, **caractérisé en ce que** l'entrepôt (2) comprend une troisième zone de stockage (9c) avec

    - des troisièmes emplacements de stockage (13c, 13c') et
    - un troisième système de transport de marchandises (14c, 14d) pour le transport des marchandises (22c, 22d) entre les troisièmes emplacements de stockage (13c, 13c') et la station de chargement (3),

    dans lequel les marchandises (22c, 22d) sont prises en charge, lors du déstockage hors de la troisième zone de stockage (9c), par le troisième système de transport de marchandises (14c, 14d), à partir des troisièmes emplacements de stockage (13c, 13c') et sont transportées par le troisième système de transport de marchandises (14c, 14d) vers la station de chargement (3).

8.  Procédé selon la revendication 7, **caractérisé en ce que** les marchandises posées et les marchandises suspendues sont stockées dans la troisième zone de stockage (9c) avec des troisièmes moyens de chargement (25a..25c).

9.  Procédé selon l'une des revendications 3 à 4 et une des revendications 5 à 8, **caractérisé en ce que** la station de chargement (3) comprend un premier dispositif de chargement (10a) et un deuxième dispositif de chargement (10b), dans lequel

    - les marchandises (22a) sont prises en charge, lors du déstockage hors de la première zone de stockage (9a), par le premier système de transport de marchandises (14a), à partir des premiers emplacements de stockage (13a) et sont transportées par le premier système de transport de marchandises (14a) vers le premier dispositif de chargement (10a) et
    - les marchandises (22b) sont prises en charge, lors du déstockage hors de la deuxième zone de stockage (9b), par le deuxième système de transport de marchandises (14b), à partir des deuxièmes emplacements de stockage (13b) et sont transportées par le deuxième système de transport de marchandises (14b) vers le deuxième dispositif de chargement (10b).

10. Procédé selon l'une des revendications 3 à 9, **caractérisé en ce que** la station de chargement (3) comprend un premier dispositif de chargement (10a) et un deuxième dispositif de chargement (10b), dans lequel les marchandises (22c, 22d) sont prises en charge, lors du déstockage hors de la troisième zone de stockage (9c), par le troisième système de transport de marchandises (14c, 14d), à partir des troisièmes emplacements de stockage (13c, 13c') et sont transportées par le troisième système de transport de marchandises (14c, 14d) soit vers le premier dispositif de chargement (10a) soit vers le deuxième dispositif de chargement (10b).

11. Procédé selon l'une des revendications 2 à 10, **caractérisé en ce que** la marchandise suspendue est transportée, à partir d'une troisième zone de stockage (9c), par le système de convoyage suspendu (7a..7f), vers l'unité de tri (4) ou la station d'emballage (5).

12. Procédé selon l'une des revendications 1 à 11, **caractérisé en ce que** l'entrepôt (2) comprend une troisième zone de stockage (9c) avec

- des troisièmes emplacements de stockage (13c, 13c') et
- un troisième système de transport de marchandises (14e, 14f) pour le transport des marchandises (22c, 22d) entre les troisièmes emplacements de stockage (13c, 13c') et le système de convoyage suspendu (7a..7f),

dans lequel

- les marchandises (22c, 22d) de la troisième zone de stockage (9c) comprennent des marchandises suspendues qui sont stockées avec les troisièmes moyens de chargement (25a..25c) et
- les marchandises suspendues sont prises en charge, lors du déstockage hors de la troisième zone de stockage (9c), par le troisième système de transport de marchandises (14e, 14f), à partir des troisièmes emplacements de stockage (13c, 13c') et sont transférées par le troisième système de transport de marchandises (14e, 14f) au système de convoyage suspendu (7a..7f).

13. Procédé selon l'une des revendications 2 à 12, **caractérisé en ce que** le troisième moyen de chargement (25a..25c) de la troisième zone de stockage (9c) est constitué

- d'un sac suspendu avec un support suspendu pour le transport par le troisième système de transport de marchandises (14c..14f) et un espace de stockage (26) pour le logement de la marchandise (22c, 22d) et/ou
- d'un sac suspendu avec un support suspendu pour le transport par le troisième système de transport de marchandises (14c..14f) et un espace de stockage (26) pour le logement de la marchandise (22c, 22d) et un crochet de transport pour la suspension de la marchandise (22c, 22d),

et/ou

- d'un adaptateur suspendu pour la suspension de la marchandise (22c, 22d).

14. Procédé selon l'une des revendications 2 à 13, **caractérisé en ce qu'**au moins une des première et deuxième zone de stockage (9a, 9b) est un entrepôt de réserve et la troisième zone de stockage (9c) est un entrepôt de retour.

15. Procédé selon l'une des revendications 2 à 14, **caractérisé par** l'étape supplémentaire suivante :

- analyse de la marchandise (22a..22e) stockée dans l'entrepôt (2) au moins dans une des première et deuxième zones de stockage (9a, 9b) et la troisième zone de stockage (9c) par le système de commande (8),
- détermination de la marchandise (22a..22e) nécessaire selon un des ordres de préparation de commande,
- déstockage de la marchandise (22c, 22d) hors de la troisième zone de stockage (9c) s'il est constaté, lors de l'analyse, que la marchandise (22a..22e) nécessaire est stockée aussi bien dans une des première et deuxième zones de stockage (9a, 9b) que dans la troisième zone de stockage (9c).

16. Procédé selon l'une des revendications 2 à 14, **caractérisé par** l'étape supplémentaire suivante :

- analyse de la marchandise (22a..22e) stockée dans l'entrepôt (2) au moins dans une des première et deuxième zones de stockage (9a, 9b) et la troisième zone de stockage (9c) par le système de commande (8),
- détermination de la marchandise (22a..22e) nécessaire selon un des ordres de préparation de commande,
- déstockage de la marchandise (22a, 22b) hors de la troisième zone de stockage (9c) s'il est constaté, lors de l'analyse, que la marchandise (22a..22e) nécessaire est stockée aussi bien dans une des première et deuxième zones de stockage (9a, 9b) que dans la troisième zone de stockage (9c).

17. Procédé selon l'une des revendications 1 à 16, **caractérisé en ce que** le premier et/ou le deuxième moyen de chargement (23, 24), après le transfert de la marchandise (22a..22e) selon un des premier et deuxième ordres de préparation de commandes, transporté à nouveau vers l'entrepôt (2), si une marchandise (22a..22e) est encore contenue dans le premier et/ou le deuxième moyen de chargement (23, 24).

18. Procédé selon l'une des revendications 1 à 17, **caractérisé en ce que** le moyen de transport (28a, 28b) présente une caractéristique d'identification et une caractéristique d'identification est détectée par la marchandise (22a..22e) à l'aide du système de commande (8), dans lequel, après le transfert de la marchandise (22a..22e) vers le moyen de transport (28a, 28b), un moyen de détection détecte automatiquement la caractéristique d'identification du moyen de transport (28a, 28b) et le système de commande (8) associe la marchandise (22a..22e) avec le moyen de transport (28a, 28b) correspondant.

19. Procédé selon l'une des revendications 1 à 18, **ca-**

ractérisé en ce qu'au moins un des moyens de transport (28a, 28b) est chargé avec plus d'une marchandise (22a, 22b) conformément à un des premier et deuxième ordres de préparation de commandes.

20. Procédé selon l'une des revendications 1 à 19, caractérisé en ce que le tri des moyens de transport (28a, 28b) dans l'unité de tri (4) comprend le tri des moyens de transport (28a, 28b) selon une séquence des marchandises (22a..22e) dans l'ordre de préparation de commande correspondant.

21. Procédé selon l'une des revendications 1 à 20, caractérisé en ce que les marchandises (22a..22e) sont retirées des moyens de transport (28a, 28b) au niveau de la station d'emballage (5) et sont transférées dans des moyens d'expédition (30).

22. Procédé selon l'une des revendications 1 à 21, caractérisé en ce que, après le transfert des une ou plusieurs marchandises (22a..22e) selon un des premier, deuxième et troisième ordres de préparation de commandes hors du moyen de transport (28a, 28b) ou des moyens de transport (28a, 28b) vers l'au moins un moyen d'expédition (30), l'au moins un moyen d'expédition (30) est transporté vers un dispositif d'expédition (6).

23. Système de stockage et de préparation de commandes (1a, 1b) pour la préparation de commandes de marchandises, plus particulièrement pour l'exécution du procédé selon l'une des revendications 1 à 22, comprenant :

- un entrepôt (2) pour la mise à disposition de marchandises (22a..22e), dans lequel les marchandises (22a..22e) comprennent des marchandises posées et/ou des marchandises suspendues et dans lequel l'entrepôt (2) comprend
- des emplacements de stockage (13) et
- un système de transport de marchandises (14) pour le transport des marchandises (22a..22e) entre les emplacements de stockage (13) et la station de chargement (3) et
- une station de chargement (3) pour le transfert des marchandises (22a..22e) vers des moyens de transport (28a, 28b) selon des ordres de préparation de commandes,
- une unité de tri (4) pour le tri des moyens de transport (28a, 28b),
- une station d'emballage (5) pour le transfert des marchandises (22a..22e) des moyens de transport (28a, 28b) vers des moyens d'expédition (30) selon les ordres de préparation de commandes,
- un système de convoyage suspendu (7a..7f) avec des moyens de transport (28a, 28b) pour le logement des marchandises (22a..22e) et pour le transport des marchandises (22a..22e) dans les moyens de transport (28a, 28b) entre la station de chargement (3), l'unité de tri (4) et la station d'emballage (5),
- et un système de commande (8) qui
- est relié avec l'entrepôt (2), la station de chargement (3), l'unité de tri (4), le système de convoyage suspendu (7a..7f) et la station d'emballage (5) à l'aide d'une liaison de données,
- est conçu pour la détection d'ordres de préparation de commandes et
- est conçu pour le contrôle du système de transport de marchandises (14) pour le déstockage des marchandises (22a..22e) hors de l'entrepôt (2), dans lequel le déstockage comprend :
- un transport d'une marchandise (22a) hors de l'entrepôt (2) selon un premier ordre de préparation de commande vers la station de chargement (3) et
- un transport d'une marchandise (22b) hors de l'entrepôt (2) selon un deuxième ordre de préparation de commande vers la station de chargement (3)

caractérisé en ce que
le système de commande (8) est en outre conçu

- pour contrôler le système de transport de marchandises (14) pour le déstockage des marchandises (22a..22e) hors de l'entrepôt (2), conformément à chaque ordre de préparation de commande, de manière individuelle et indépendante des autres ordres de préparation de commandes et
- pour contrôler le système de convoyage suspendu (7a, 7b) pour le transport direct des moyens de transport (28a, 28b) de la station de chargement (3) vers l'unité de tri (4) selon chaque ordre de préparation de commande, de manière individuelle et indépendante des autres ordres de préparation de commandes.

24. Système de stockage et de préparation de commandes (1a, 1b) selon la revendication 23, caractérisé en ce que

- l'entrepôt (2) comprend, dans une première zone de stockage (9a), des premiers emplacements de stockage (13a) des emplacements de stockage (13) et un premier système de transport de marchandises (14a), fonctionnant de manière automatisée, du système de transport de marchandises (14), pour le transport des marchandises (22a) entre les premiers emplacements de stockage (13a) et la station de chargement (3) et
- le système de commande (8) est conçu pour contrôler le premier système de transport de marchandises (14a), lors du déstockage des marchandises (22a) hors de la première zone de stockage (9a) pour la prise en charge des marchandises (22a) à partir des premiers emplacements de stockage (13a) et pour le transport des marchandises (22a) vers la station de chargement (3).

25. Système de stockage et de préparation de commandes (1a, 1b) selon la revendication 23 ou 24, **caractérisé en ce que**

   - l'entrepôt (2) comprend, dans une deuxième zone de stockage (9b), des deuxièmes emplacements de stockage (13b) des emplacements de stockage (13) et un deuxième système de transport de marchandises (14b), fonctionnant de manière automatisée, du système de transport de marchandises (14), pour le transport des marchandises (22b) entre les deuxièmes emplacements de stockage (13b) et la station de chargement (3) et
   - le système de commande (8) est conçu pour contrôler le deuxième système de transport de marchandises (14b), lors du déstockage des marchandises (22b) hors de la deuxième zone de stockage (9b) pour la prise en charge des marchandises (22b) à partir des deuxièmes emplacements de stockage (13b) et pour le transport des marchandises (22b) vers la station de chargement (3).

26. Système de stockage et de préparation de commandes (1a, 1b) selon l'une des revendications 23 à 25, **caractérisé en ce que** l'entrepôt (2) comprend, dans une troisième zone de stockage (9c), des troisièmes emplacements de stockage (13c, 13c') des emplacements de stockage (13) et un troisième système de transport de marchandises (14c, 14d) du système de transport de marchandises (14), pour le transport des marchandises (22c, 22d) entre les troisièmes emplacements de stockage (13c, 13c') et la station de chargement (3) et

   - le système de commande (8) est conçu pour contrôler le troisième système de transport de marchandises (14c, 14d), lors du déstockage des marchandises (22c, 22d) hors de la troisième zone de stockage (9c) pour la prise en charge des marchandises (22c, 22d) à partir des troisièmes emplacements de stockage (13c, 13c') et pour le transport des marchandises (22c, 22d) vers la station de chargement (3).

27. Système de stockage et de préparation de commandes (1a, 1b) selon l'une des revendications 23 à 26, **caractérisé en ce que** le système de commande (8) est conçu pour contrôler le système de convoyage suspendu (7a..7f) pour le transport des marchandises suspendues d'une troisième zone de stockage (9c) vers l'unité de tri (4) ou vers l'unité d'emballage (5).

28. Système de stockage et de préparation de commandes (1a, 1b) selon l'une des revendications 23 à 27, **caractérisé en ce que**

   - l'entrepôt (2) comprend, dans une troisième zone de stockage (9c), des troisièmes emplacements de stockage (13c, 13c') des emplacements de stockage (13) et un troisième système de transport de marchandises (14e, 14f) du système de transport de marchandises (14), pour le transport des marchandises (22c, 22d) entre les troisièmes emplacements de stockage (13c, 13c') et le système de convoyage suspendu (7a..7f),
   - les marchandises (22c, 22d) dans la troisième zone de stockage (9c) comprennent des marchandises suspendues qui sont stockées avec un troisième moyen de chargement (25) et
   - le système de commande (8) est conçu pour contrôler le troisième système de transport de marchandises (14e, 14f), lors du déstockage des marchandises (22c, 22d) hors de la troisième zone de stockage (9c) pour la prise en charge des marchandises (22c, 22d) à partir des troisièmes emplacements de stockage (13c, 13c') et pour le transfert des marchandises (22c, 22d) au système de convoyage suspendu (7a..7f).

29. Système de stockage et de préparation de commandes (1a, 1b) selon l'une des revendications 26 à 28, **caractérisé en ce que** le troisième moyen de chargement (25a..25c) de la troisième zone de stockage (9c) est constitué

   - d'un sac suspendu avec un support suspendu pour le transport par le troisième système de transport de marchandises (14c..14f) et un espace de stockage (26) pour le logement de la marchandise (22c, 22d) et/ou
   - d'un sac suspendu avec un support suspendu pour le transport par le troisième système de transport de marchandises (14c..14f) et un espace de stockage (26) pour le logement de la marchandise (22c, 22d) et un crochet de transport pour la suspension de la marchandise (22c, 22d),

   et/ou

   - d'un adaptateur suspendu pour la suspension de la marchandise (22c, 22d).

30. Système de stockage et de préparation de commandes (1a, 1b) selon l'une des revendications 23 à 29, **caractérisé en ce que** la station de chargement (3) comprend un premier dispositif de chargement (10a) et un deuxième dispositif de chargement (10b), dans lequel le système de commande (8) est conçu

- pour contrôler le premier système de transport de marchandises (14a), lors du déstockage des marchandises (22a) hors de la première zone de stockage (9a) pour la prise en charge des marchandises (22a) à partir des premiers emplacements de stockage (13a) et pour le transport des marchandises (22a) vers le premier dispositif de chargement (10a) et
- pour contrôler le deuxième système de transport de marchandises (14b), lors du déstockage des marchandises (22b) hors de la deuxième zone de stockage (9b) pour la prise en charge des marchandises (22b) à partir des deuxièmes emplacements de stockage (13b) et pour le transport des marchandises (22b) vers le deuxième dispositif de chargement (10b).

31. Système de stockage et de préparation de commandes (1a, 1b) selon l'une des revendications 23 à 29, **caractérisé en ce que** la station de chargement (3) comprend un premier dispositif de chargement (10a) et un deuxième dispositif de chargement (10b), dans lequel le système de commande (8) est conçu pour contrôler le troisième système de transport de marchandises (14c, 14d), lors du déstockage des marchandises (22c, 22d) hors de la troisième zone de stockage (9c) pour la prise en charge des marchandises (22c, 22d) à partir des troisièmes emplacements de stockage (13c, 13c') et pour le transport des marchandises (22c, 22d) soit vers le premier dispositif de chargement (10a) soit vers le deuxième dispositif de chargement (10b).

32. Système de stockage et de préparation de commandes (1a, 1b) selon l'une des revendications 23 à 31, **caractérisé en ce qu'**au moins une des première et deuxième zones de stockage (9a, 9b) est conçue comme un entrepôt de réserve et la troisième zone de stockage (9c) est conçue comme un entrepôt de retour (2).

33. Système de stockage et de préparation de commandes (1a, 1b) selon l'une des revendications 23 à 32, **caractérisé en ce que** le premier système de transport de marchandises (14a) est constitué d'un mécanisme de convoyage de déstockage pour le transport des marchandises (22a) des premiers emplacements de stockage (13a) vers la station de chargement (3) et d'un mécanisme de convoyage de stockage pour le transport des marchandises (22a) de la station de chargement (3) vers les premiers emplacements de stockage (13a).

34. Système de stockage et de préparation de commandes (1a, 1b) selon l'une des revendications 23 à 33, **caractérisé en ce que** le deuxième système de transport de marchandises (14b) est constitué d'un mécanisme de convoyage de déstockage pour le transport des marchandises (22b) des deuxièmes emplacements de stockage (13b) vers la station de chargement (3) et d'un mécanisme de convoyage de stockage pour le transport des marchandises (22b) de la station de chargement (3) vers les premiers emplacements de stockage (13b).

35. Système de stockage et de préparation de commandes (1a, 1b) selon l'une des revendications 23 à 34, **caractérisé en ce que** chaque moyen de transport (28a, 28b) présente une caractéristique d'identification lisible sans contact avec un identifiant unique, plus particulièrement une caractéristique d'identification lisible de manière optique par liaison radio.

36. Système de stockage et de préparation de commandes (1a, 1b) selon l'une des revendications 23 à 35, **caractérisé en ce que** l'unité de tri (4) comprend un premier étage de tri (11a) et le premier étage de tri (11a) comprend une ou plusieurs pistes de tri, dans lequel le premier étage de tri (11a) est conçu pour entreposer, sur chaque piste de tri, les moyens de transport (28a, 28b) d'un seul premier ordre de préparation de commande ou d'un seul deuxième ordre de préparation de commande.

37. Système de stockage et de préparation de commandes (1a, 1b) selon la revendication 23 ou 36, **caractérisé en ce que** l'unité de tri (4) comprend un premier étage de tri (11a) et au moins un deuxième étage de tri (11b) à la suite de celui-ci, dans lequel le deuxième étage de tri (11b) est conçu pour le tri des moyens de transport (28a, 28b) en un des premier et deuxième ordres de préparation de commande selon une séquence prédéterminée.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2581329 B1
- DE 102011116081 B3
- DE 202017106993 U1
- DE 202017100206 U1
- AT 503202018 A
- AT 516612 B1